# EUROPÄISCHE PATENTSCHRIFT

(11) **EP 2 832 507 B1**
(45) Veröffentlichungstag und Bekanntmachung des Hinweises auf die Patenterteilung: **01.04.2020**
(21) Anmeldenummer: 13003773.2
(22) Anmeldetag: 29.07.2013
(51) Int. Cl.: B27B 27/04, B27B 31/00, B27B 5/065

(54) **Verfahren und Plattenaufteilanlage zum Zersägen von Werkstücken**
Method and board separation assembly for sawing workpieces
Procédé destiné et scie à panneaux horizontale au sciage de pièces à usiner

(43) Veröffentlichungstag der Anmeldung: 04.02.2015
(73) Patentinhaber: IMA Schelling Austria GmbH, 6858 Schwarzach (AT)
(72) Erfinder: Walch, Alexander, 6850 Dornbirn (AT); Höll, Mario, 6923 Lauterach (AT); Pöschl, Wolfgang, 6844 Altach (AT)
(74) Vertreter: Fechner, Thomas

(56) Entgegenhaltungen:
- EP-A1- 1 439 044
- EP-A1- 1 854 600
- EP-A2- 2 147 760
- DE-A1-102010 010 746

## Beschreibung

Die vorliegende Erfindung betrifft ein Verfahren zum Zersägen von zumindest einem, aus einer Platte oder einem Plattenstapel bestehenden Werkstück mit einer Plattenaufteilanlage, wobei das Werkstück auf einem Auflagetisch der Plattenaufteilanlage liegend zum Zersägen in einer Zuführrichtung aus einem, in Zuführrichtung gesehen vor einer Sägelinie der Plattenaufteilanlage angeordneten, ersten Arbeitsbereich des Auflagetisches der Sägelinie zugeführt und mittels zumindest einer Sägeeinrichtung der Plattenaufteilanlage entlang der Sägelinie in zumindest zwei Werkstückteile zersägt wird und wobei zumindest eines der Werkstückteile über die Sägelinie hinweg in einen, in Zuführrichtung gesehen, hinter der Sägelinie der Plattenaufteilanlage angeordneten zweiten Arbeitsbereich des Auflagetisches transportiert wird. Ein Verfahren gemäß dem Oberbegriff des Anspruchs 1 und eine Plattenaufteilanlage gemäß dem Oberbegriff des Anspruchs 13 sind bekannt aus DE 10 2010 010 746 A1.

Plattenaufteilanlagen werden z.B. bei der Möbelfertigung dazu verwendet, Werkstücke, welche aus Platten oder Plattenstapeln bestehen, zuzusägen bis sie in Werkstückteile bzw. Zuschnitte zerteilt sind, die dann der endgültigen gewünschten Größe entsprechen. In Folge der fortschreitenden Individualisierung, insbesondere im Bereich der Möbelfertigung, ergeben sich für den Zuschnitt der Werkstücke immer geringere Stückzahlen von Werkstückteilen mit derselben Endgröße bzw. - geometrie.

Um den Abfall möglichst gering zu halten, ergeben sich dadurch immer komplexere Sägepläne, denen folgend ein Werkstück zersägt werden soll. Bei der Abarbeitung dieser Säge-, Schnitt- bzw. Aufteilpläne werden die Werkstückteile mehrfach einer Sägelinie zugeführt, bis sie in Werkstückteile mit der endgültigen Größe zerteilt sind.

Um diese komplexen Sägepläne vollautomatisch abarbeiten zu können, werden bis jetzt aufwendige Plattenaufteilanlagen mit mehreren Sägen und/oder aufwendiger Fördertechnik zum Transport der Werkstückteile eingesetzt, wie dies z.B. in der AT 510 304 A1 gezeigt ist.

Ein gattungsgemäßes Verfahren wird z.B. in der DE 10 2010 010 746 A1 gezeigt. In dieser Schrift erfolgt der Transport des Werkstücks in Zuführrichtung mittels einer Vorschubeinrichtung, welche auf parallel zur Zuführrichtung angeordneten Schienen geführt ist. Ähnliches zeigt die EP 2 147 760 A2. In der EP 1 854 600 A1 sind, in Zuführrichtung gesehen, vor und hinter der Sägelinie Anschlagschienen vorgesehen. Mittels einer zweiten Vorschubeinrichtung ist in der DE 10 2010 010 746 A1 eine Parallelbearbeitung von verschiedenen Werkstücken bzw. Werkstückteilen möglich.

Aufgabe der Erfindung ist es, ein gattungsgemäßes Verfahren dahingehend zu verbessern, dass auch komplexe Sägepläne effektiv mit einer vergleichsweise einfachen Plattenaufteilanlage einfach und schnell abgearbeitet werden können.

Die Erfindung schlägt hierfür vor, dass der erste Arbeitsbereich und/oder der zweite Arbeitsbereich in einer orthogonal zur Zuführrichtung ausgerichteten Querrichtung von zwei einander gegenüberliegenden Anschlagschienen begrenzt ist bzw. sind und zumindest eines der Werkstückteile hin zu einer der Anschlagschienen befördert wird, während zumindest ein anderes der Werkstückteile (9) an der anderen Anschlagschiene (12, 13) anliegend an der Sägelinie (6) weiter zersägt wird.

Es ist somit ein Grundgedanke der Erfindung, zumindest eines der Werkstückteile hin zu einer den ersten Arbeitsbereich und/oder den zweiten Arbeitsbereich seitlich begrenzenden Anschlagschiene zu befördern, während zumindest ein anderes der Werkstückteile an der anderen Anschlagschiene anliegend an der Sägelinie weiter zersägt wird. Hierdurch kann die Plattenaufteilanlage relativ einfach ausgestaltet sein und trotzdem sehr effektiv auch komplizierte Sägepläne mit verschiedenen Endformaten abarbeiten. Bezüglich der Formulierung, dass das Befördern des zumindest einen Werkstückteils hin zur einen Anschlagschiene während des Zersägens des zumindest anderen Werkstückteils anliegend an der anderen Anschlagschiene erfolgt, ist darauf hinzuweisen, dass diese beiden Vorgänge durchaus unterschiedlich lang dauern können. Bevorzugt ist dabei vorgesehen, dass das erwähnte Befördern schneller geht als das Zersägen, da dann sichergestellt ist, dass die Sägevorgänge schnellstmöglich hintereinander durchgeführt werden können und die Sägeeinrichtung im Sinne einer möglichst raschen Abarbeitung des Sägeplans zeitoptimiert eingesetzt werden kann. Die Formulierung mit "während" bedeutet somit, dass sich das genannte Befördern des zumindest einen Werkstückteils mit dem genannten Zersägen des zumindest einen anderen Werkstückteils zumindest zeitlich überlappt.

Die Anschlagschienen können nur den ersten Arbeitsbereich oder nur den zweiten Arbeitsbereich oder beide Arbeitsbereiche in Querrichtung seitlich begrenzen. Bezüglich einer zur Zuführrichtung parallelen Symmetrieachse achsensymmetrische Anordnungen der Anschlagschienen sind dabei bevorzugt. Es kann aber auch eine diagonale Art der Anordnung der Anschlagschienen gewählt werden, z.B. indem die eine Anschlagschiene den ersten Arbeitsbereich auf der einen Seite begrenzt und eine zweite, gegenüberliegende Anschlagschiene den zweiten Arbeitsbereich auf der gegenüberliegenden Seite begrenzt. All dies sind mögliche Ausgestaltungsformen der Erfindung.

Zur Zuführrichtung ist anzumerken, dass dies die Richtung ist, in der das Werkstück oder die Werkstückteile in der Regel unmittelbar vor oder beim Sägevorgang selbst der Sägelinie zugeführt werden. Dies bedeutet aber nicht zwingend, dass das Werkstück also z.B. die Rohplatte bzw. der Rohplattenstapel, vor Beginn des erfindungsgemäßen Verfahrens nicht auch erst einmal entgegen der Zuführrichtung, z.B. manuel oder mittels der weiter unten genannten Vorschubeinrichtung, in den ersten Arbeitsbereich eingeschoben oder eingezogen werden können.

Beim Befördern der Werkstückteile hin zu einer der Anschlagschienen kann bereits ein Ausrichten an der Anschlagschiene erfolgen. Dies muss aber nicht sein. Das exakte Ausrichten des Werkstückteils bzw. der Werkstückteile durch flächiges Andrücken an die Anschlagschiene in Vorbereitung auf den nächsten Sägevorgang kann auch separat z.B. erst unmittelbar vor dem Weiterzersägen des zumindest einen Werkstückteils erfolgen. Hierzu kann z.B. vorgesehen sein, dass das Werkstück und/oder zumindest eines der Werkstückteile, vorzugsweise unmittelbar vor seinem bzw. ihrem Zersägen und/oder Absenken des Druckbalkens, von zumindest einem Ausrichter, vorzugsweise der Plattenaufteilanlage, zur Ausrichtung in einer Querrichtung an eine der Anschlagschienen angedrückt wird bzw. werden. Der oder die Ausrichter ist bzw. sind günstigerweise möglichst nah an der Sägelinie angeordnet. Dies kann z.B. realisiert werden, indem sie verfahrbar, und vorzugsweise auch heb- und senkbar, an dem weiter hinten noch erwähnten Druckbalken oder am weiter hinten ebenfalls noch genauer geschilderten Sägewagen angeordnet sind. Ausrichter können auch als, insbesondere in Querrichtung verfahrbare, vorzugsweise heb- und absenkbare, Zapfen oder Nocken in den Auflagetisch integriert sein.

Besonders bevorzugte Ausgestaltungsformen der Erfindung sehen vor, dass in nacheinander durchgeführten Verfahrensschritten abwechselnd in einem der Verfahrensschritte zumindest eines der Werkstückteile hin zu einer der Anschlagschienen befördert wird, während zumindest ein anderes der Werkstückteile an der anderen Anschlagschiene anliegend an der Sägelinie weiter zersägt wird und in einem später durchgeführten Verfahrensschritt zumindest eines der Werkstückteile an der einen der Anschlagschienen anliegend weiter an der Sägelinie zersägt wird, während zumindest ein anderes der Werkstückteile hin zu der anderen Anschlagschiene befördert wird.

Es wird somit eine bevorzugte alternierende Vorgehensweise vorgeschlagen, bei der zumindest ein Werkstück auf die eine Seite an eine der Anschlagschienen befördert und damit für den nächsten Sägevorgang vorpositioniert wird, während zumindest ein anderes Werkstückteil an der anderen Anschlagschiene anliegend weiter zersägt wird. Sind alle an diesem Werkstückteil bzw. diesen Werkstückteilen in diesem Verfahrensschritt durchgeführten Sägevorgänge vollführt, so können die Werkstückteile, welche bereits ihre endgültige Dimension erreicht haben, abtransportiert werden. Die anderen Werkstückteile bleiben dann an der Anschlagschiene liegen und es wird nun das bzw. die bereits für den nächsten Sägevorgang vorbereitete Werkstückteil(e) an der auf der anderen Seite liegenden Anschlagschiene weiter zersägt. Dieses Abwechseln der Bearbeitung auf den verschiedenen Seiten des ersten und/oder zweiten Arbeitsbereichs, an jeweils einer der Anschlagschienen, kann so lange alternierend bzw. abwechselnd fortgeführt werden, bis jedes der Werkstückteile seine endgültige Dimension erreicht hat. Es können so effektiv und einfach mit relativ geringem maschinentechnischen Aufwand Sägepläne mit beliebig vielen Schnittebenen, also mit Erst-, Zweit-, Dritt- und Viertschnittlinien usw. realisiert werden. Das Verfahren kann auf Plattenaufteilanlagen mit manuellem, teilautomatisierten oder vollautomatisierten Handling der Werkstücke vor und hinter der Sägelinie angewendet werden. Die nach diesem Verfahren arbeitetenden Plattenaufteilanlagen können sehr kompakt aufgebaut sein und bieten gleichzeitig eine hohe Flexiblität und eine hohe Aufteilleistung.

In diesem Sinne sehen besonders bevorzugte Ausgestaltungsformen vor, dass alle Sägevorgänge bis zur vollständigen Aufteilung des Werkstücks an der einen Sägelinie der Plattenaufteilanlage durchgeführt werden. Erfindungsgemäße Verfahren können somit an einer Plattenaufteilanlage durchgeführt werden, welche nur eine einzige Sägelinie aufweist. Die Sägelinie kann über eine einzige aber auch über mehrere Sägeeinrichtungen verfügen, welche entlang der Sägelinie verfahrbar sind, um den jeweiligen Sägevorgang durchzuführen. Es kann sich z.B. um an sich bekannte Unterflurkreissägen handeln, welche für den Sägevorgang mit ihrem Sägeblatt über die Auflageebene des Auflagetisches angehoben und für Rückfahrten entlang der Sägelinie unter die Auflageebene abgesenkt werden können. Die Sägeeinrichtungen können ein oder mehrere, vorzugsweise zwei Sägeblätter aufweisen, wobei eines der Sägeblätter z.B. als Vorritzter und das zweite der Sägeblätter dann als den eigentlichen Sägevorgang durchführendes Sägeblatt verwendet werden. Die Sägeeinrichtungen weisen günstigerweise einen Sägewagen auf, mit dem sie bzw. die Sägeblätter entlang der Sägelinie verfahrbar sind. Solche Sägeeinrichtungen sind in Form von Unterflurkreissägen bekannt. Der eigentliche Sägevorgang wird günstigerweise in Richtung hin zu der Anlageschiene, an der das zu zersägende Werkstück oder Werkstückteil gerade anliegt, vorgenommen.

Im ersten Arbeitsbereich des Auflagetisches ist günstigerweise zumindest eine Vorschubeinrichtung vorgesehen. Mit dieser können die zu zersägenden Werkstücke bzw. Werkstückteile in Zuführrichtung hin zur Sägelinie transportiert werden. Günstigerweise ist mit der zumindest einen Vorschubeinrichtung aber auch ein Rücktransport entgegen der Zuführrichtung möglich. Genauso gut kann es vorgesehen sein, dass die Vorschubeinrichtung bzw. die Vorschubeinrichtungen über die Sägelinie hinweg zumindest ein Stück weit in den zweiten Arbeitsbereich hineingreifen kann bzw. können. Allgemein gesprochen, ist bevorzugt vorgesehen, dass das Werkstück und/oder zumindest eines der Werkstückteile von zumindest einer Vorschubeinrichtung der Plattenaufteilanlage in oder entgegen der Zuführrichtung im ersten Arbeitsbereich und/oder im zweiten Arbeitsbereich transportiert wird bzw. werden. Geeignete Vorschubeinrichtungen sind beim Stand der Technik grundsätzlich in verschiedenen Ausgestaltungsformen bekannt. Sie weisen bevorzugt einen oder mehrere Greifer auf, mit dem sie die Werkstücke bzw. Werkstückteile greifen und festhalten können. Darüber hinaus weisen sie auch einen geeigneten Antrieb zur Bewegung der Vorschubeinrichtung, gegebenenfalls samt Werkstück bzw. Werkstückteil in Zuführrichtung und auch in Gegenrichtung auf. Die zumindest eine Vorschubeinrichtung und die gegebenenfalls vorhandenen Greifer sind günstigerweise höhenverstellbar, so dass sie über einzelne Werkstücke auch hinweggefahren werden können. Erfindungsgemäße Verfahren können den Transport mittels einer oder auch mehrerer solcher Vorschubeinrichtungen im ersten und auch im zweiten Arbeitsbereich vorsehen. Es sind aber auch Varianten erfindungsgemäßer Verfahren denkbar, bei denen das Zuführen der Werkstücke oder Werkstückteile in Zuführrichtung oder auch das Zurückziehen in Gegenrichtung im ersten und auch im zweiten Arbeitsbereich manuell durchgeführt wird.

Für die Ausbildung des Auflagetisches sowohl im ersten als auch im zweiten Arbeitsbereich können verschiedene, beim Stand der Technik an sich bekannte Varianten herangezogen werden. Um die Reibung zwischen Auflagetisch und Werkstück bzw. Werkstückteil möglichst gering zu halten sehen bevorzugte Varianten vor, dass die Auflagefläche des Auflagetisches auf der das Werkstück bzw. die Werkstücke aufliegen, als Rollenbahn, als Luftkissenplatte, als Bürstenoberfläche oder dergleichen ausgebildet sind.

Die Sägelinie verläuft günstigerweise linear bzw. gerade. Bevorzugt erstreckt sie sich über die gesamte Breite des ersten und zweiten Arbeitsbereichs. Die Anschlagschienen, welche den ersten und/oder zweiten Arbeitsbereich in Querrichtung begrenzen, sind bevorzugt jeweils parallel zur Zuführrichtung ausgerichtet. Sie liegen also günstigerweise auch parallel zueinander und sind bevorzugt justierbar. Es handelt sich bei den Anschlagschienen somit nicht um beliebige Flächen sondern um sehr exakt in ihrer Lage und Richtung ausgerichtete Anschlagschienen, welche als Anschläge vorgesehen sind und damit eine Möglichkeit bilden, die Werkstückteile für die weitere Verarbeitung exakt so auszurichten, wie dies für die folgenden Sägevorgänge benötigt wird.

Zum Begriff der Werkstückteile sei darauf hingewiesen, dass ein Werkstückteil entweder durch Zersägen des Werkstücks oder aber auch durch Zersägen eines, durch einen vorherigen Sägevorgang hergestellten Werkstückteils entstehen kann. Werkstückteile sind also Teile des Werkstücks, welche durch zumindest einen, aber auch durch mehrere Sägevorgänge erzeugt wurden. Diese Werkstückteile können jeweils weiter zersägt werden, um noch kleinere Werkstückteile herzustellen. Sie können aber auch dem jeweiligen Endformat entsprechen und nicht weiter zersägt werden. Werkstückteile sind also z.B. Teilplatten, Plattenstreifen oder entsprechende Stapel von Teilplatten oder Plattenstreifen oder eben entsprechende Zwischen- oder Endformate.

Günstigerweise sieht das erfindungsgemäße Verfahren vor, dass bei einem Sägevorgang das Werkstück oder das Werkstückteil bzw. die Werkstückteile immer entlang seiner gesamten Breite entlang der Sägelinie komplett zersägt wird bzw. werden.

Bei bevorzugten Varianten des erfindungsgemäßen Verfahrens kann auch vorgesehen sein, dass zumindest ein Werkstückteil, welches an einer der Anschlagschienen anliegend zersägt wurde, zur Weiterverarbeitung anschließend hin zur anderen Anschlagschiene befördert wird. Es kann somit ein Hin- und Hertransport der Werkstückteile zwischen den Anschlagschienen vorgesehen sein. Weiters sehen bevorzugte Varianten des erfindungsgemäßen Verfahrens vor, dass zumindest eines der Werkstückteile vor dem Weiterzersägen dieses Werkstückteils, vorzugsweise im zweiten Arbeitsbereich, auf dem Auflagetisch um eine zum Auflagetisch normal stehende Drehachse gedreht wird und hin zu einer der Anschlagschienen befördert wird.

Das Bewegen der Werkstückteile im zweiten Arbeitsbereich, also das Befördern zur jeweiligen Anschlagschiene, das Drehen und/oder auch das Entnehmen oder Auslagern in einen später noch genannten Ablagebereich, kann bei erfindungsgemäßem Verfahren grundsätzlich auch manuell durchgeführt werden. Bevorzugte Ausgestaltungsformen der Erfindung sehen aber vor, dass die Werkstückteile im zweiten Arbeitsbereich von zumindest einer, insbesondere zusätzlich zur Vorschubeinrichtung vorgesehenen, Positioniereinrichtung der Plattenaufteilanlage hin zu einer der Anschlagschienen befördert und/oder um eine zum Auflagetisch normal ausgerichtet stehende Drehachse gedreht und/oder in einem Ablagebereich auf dem Auflagetisch zwischengelagert werden. Bei dieser Positioniereinrichtung handelt es sich somit um ein Handlinggerät, welches die Werkstückteile im zweiten Arbeitsbereich bewegt, um sie in Vorbereitung eines späteren Sägevorgangs abzulegen bzw. vorzupositionieren oder um eine normal zum Auflagetisch angeordnete Drehachse zu drehen. Weiters kann mit der Positioniereinrichtung auch ein Zwischenlagern der Werkstückteile in einem Ablagebereich erfolgen. Die Positioniereinrichtung kann zumindest eine, in zumindest zwei, vorzugsweise in drei Raumrichtungen verfahrbare und gegebenenfalls auch um eine normal zum Auflagetisch stehende Drehachse drehbare Einrichtung zum Aufnehmen bzw. Greifen und Transportieren der Werkstückteile aufweisen. Bei dieser Einrichtung kann es sich um zumindest eine Ansaugeinrichtung zum Ansaugen der Werkstückteile handeln. Solche Ansaugeinrichtungen sind als Vakuumgreifer grundsätzlich bekannt. Günstigerweise weist die Positioniereinrichtung mehrere Ansaugeinrichtungen auf, die einzeln oder in Gruppen aktivierbar sind um verschieden große Werkstückteile effektiv aufnehmen bzw. ansaugen und transportieren zu können. Es sind aber auch andere Einrichtungen bzw. Greifer denkbar, mit denen die Positioniereinrichtung die Werkstückteile greifen, transportieren, drehen und/oder aus dem zweiten Arbeitsbereich auslagern und in diesen wieder einführen kann, insbesondere wenn es um das Handling von Werkstücken bzw. Werkstückteilen geht, welche aus Plattenstapeln bestehen. Im Sinne einer raschen Vorgehensweise kann bei erfindungsgemäßen Verfahren auch eine Plattenaufteilanlage mehrere Positioniereinrichtungen dieser Art aufweisen.

Bei entsprechend aufwendigen Sägeplänen kann es sein, dass ein Werkstück oder ein Werkstückteil in mehr als zwei, also drei, vier oder fünf Werkstückteile zersägt wird, wobei im nächsten Verfahrensschritt eines der Werkstückteile hin zu einer der Anschlagschienen befördert wird, das zweite der Werkstückteile an der anderen Anschlagschiene anliegend zersägt wird und die weiteren Werkstückteile derweil zwischengelagert werden müssen. Bevorzugte Ausgestaltungsformen des Verfahrens sehen hierzu vor, dass zusätzlich zum Befördern eines der Werkstückteile hin zu einer der Anschlagschienen und während des Zersägens des anderen der Werkstückteile anliegend an der anderen Anschlagschiene an der Sägelinie zumindest ein zusätzliches Werkstückteil in zumindest einem Ablagebereich auf dem Auflagetisch zwischengelagert wird. Der Ablagebereich auf dem Auflagetisch kann grundsätzlich auch im ersten Arbeitsbereich und/oder im zweiten Arbeitsbereich angeordnet sein. Bevorzugte Varianten sehen aber vor, dass der Ablagebereich auf dem Auflagetisch außerhalb des ersten Arbeitsbereichs und außerhalb des zweiten Arbeitsbereichs angeordnet ist. Im Sinne von kurzen Transportwegen und einer guten Erreichbarkeit der Ablagebereiche sehen besonders bevorzugte Varianten dann vor, dass der Ablagebereich bzw. die Ablagebereiche in der Querrichtung seitlich neben dem ersten und/oder zweiten Arbeitsbereich angeordnet ist bzw. sind.

Im Sinne einer besonders effektiven und schnellen Vorgehensweise sehen besonders bevorzugte Ausgestaltungsformen des erfindungsgemäßen Verfahrens vor, dass das zumindest eine hin zu einer der Anschlagschienen beförderte Werkstückteil in eine Position gebracht wird, in der es von der Vorschubeinrichtung bei Verharren der Vorschubeinrichtung in der Zuführrichtung wieder aufgenommen werden kann, während ein Reststück des zumindest einen anderen der Werkstückteile nach dessen Zersägen an der Sägelinie von der Vorschubeinrichtung an der anderen Anschlagschiene abgelegt wird. Hierbei ist es möglich, mit der Vorschubeinrichtung das zumindest eine im nächsten Sägevorgang zu zersägende Werkstückteil zu greifen und gleichzeitig das zumindest eine Reststück des zumindest einen vorab zersägten Werkstückteils loszulassen, ohne dass hierzu die Vorschubeinrichtung parallel zur Zuführrichtung ihre Lage ändern müsste. Die Position, in der das zumindest eine Werkstückteil abgelegt wird, befindet sich günstigerweise im Bereich eines Abfallabwurfs des Auflagetisches, durch den hindurch Abfallstücke, welche nicht weiter benötigt werden, einer Abfallentsorgung zugeführt werden können. Es kann sich bei den an sich bekannten Abfallabwürfen z.B. um durch Klappen oder anderweitig verschließbare Öffnungen im Auflagetisch handeln.

Um den Sägevorgang möglichst vibrationsarm ausgestalten zu können, sehen bevorzugte Ausgestaltungsformen des Verfahrens vor, dass das zu zersägende Werkstück oder Werkstückteil von einem Druckbalken im Bereich der Sägelinie an den Auflagetisch angedrückt wird. Geeignete Druckbalken für Plattenaufteilanlagen sind beim Stand der Technik an sich bekannt. Sie können auf den Auflagetisch bzw. das darauf aufliegende Werkstück bzw. Werkstückteil bzw. die Werkstückteile abgesenkt und wieder abgehoben werden. In der Regel sind sie vertikal verfahrbar. Besonders bevorzugte Ausgestaltungsformen von solchen Druckbalken haben eine integrierte Absaugung, was an sich auch bekannt ist. Eine Absaugung der Sägespäne kann alternativ oder zusätzlich auch durch einen im Bereich der Sägelinie im Auflagetisch vorgesehenen Spalt erfolgen, durch die die Sägeeinrichtung bzw. das Sägeblatt oder die Sägeblätter hindurchtreten. Bevorzugt ist jedenfalls vorgesehen, dass die Vorschubeinrichtung bei angehobenen Druckbalken unter dem Druckbalken hindurchfahren kann, um zumindest ein Stück weit in den zweiten Arbeitsbereich hineingreifen zu können.

Neben dem bereits genannten Verfahren betrifft die Erfindung auch eine Plattenaufteilanlage, welche zumindest Folgendes aufweist:
- einen Auflagetisch zum darauf Auflegen zumindest eines, aus einer Platte oder einem Plattenstapel bestehenden Werkstücks und
- eine Zuführrichtung für die Zuführung des Werkstücks zu einer Sägelinie der Plattenaufteilanlage und
- einen, in Zuführrichtung gesehen vor der Sägelinie angeordneten, ersten Arbeitsbereich des Auflagetisches und
- zumindest eine Sägeeinrichtung zum Zersägen des Werkstücks entlang der Sägelinie in zumindest zwei Werkstückteile und
- einen, in Zuführrichtung gesehen hinter der Sägelinie der Plattenaufteilanlage angeordneten, zweiten Arbeitsbereich des Auflagetisches und
- zumindest eine Vorschubrichtung zum Transport des Werkstücks und/oder zumindest eines der Werkstückteile in oder entgegen der Zuführrichtung im ersten Arbeitsbereich und/oder im zweiten Arbeitsbereich,
wobei erfindungsgemäß vorgesehen ist, dass die Plattenaufteilanlage zwei einander gegenüberliegende Anschlagschienen für die Werkstückteile aufweist, welche den ersten Arbeitsbereich und/oder den zweiten Arbeitsbereich in einer orthogonal zur Zuführrichtung ausgerichteten Querrichtung begrenzen und die Plattenaufteilanlage zusätzlich zur Vorschubeinrichtung zumindest eine Positioniereinrichtung zum Befördern der Werkstückteile im zweiten Arbeitsbereich an die Anschlagschienen und/oder zum Drehen der Werkstückteile im zweiten Arbeitsbereich um eine zum Auflagetisch normal ausgerichtet stehende Drehachse aufweist.

Erfindungsgemäße Plattenaufteilanlagen weisen in bevorzugten Ausgestaltungsformen die oben bezüglich des Verfahrens bereits genannten Bauteile, Merkmale und Eigenschaften auf, auch wenn diese im Sinne einer gerafften Darstellung hier nicht noch einmal explizit wiederholt werden.

Weitere Merkmale und Einzelheiten bevorzugter Varianten der Erfindung werden nachfolgend anhand von Ausführungsbeispielen erläutert. Es zeigen:
Fig. 1 eine Draufsicht auf eine schematisierte Darstellung einer ersten erfindungsgemäßen Plattenaufteilanlage;
Fig. 2 eine gegenüber der Fig. 1 abgewandelte zweite erfindungsgemäße Variante einer Plattenaufteilanlage;
Fig. 3 bis 5 schematische, beispielhaft ausgewählte Darstellungen zu verschiedenen Ausgestaltungsformen geeigneter Sägeeinrichtungen;
Fig. 6 bis 21 Darstellungen zu einem exemplarisch dargestellten ersten Sägeplan und Ablauf eines erfindungsgemäßen Verfahrens und
Fig. 22 bis 24 ein weiteres Beispiel eines erfindungsgemäßen Verfahrens in einer verkürzten Darstellung.

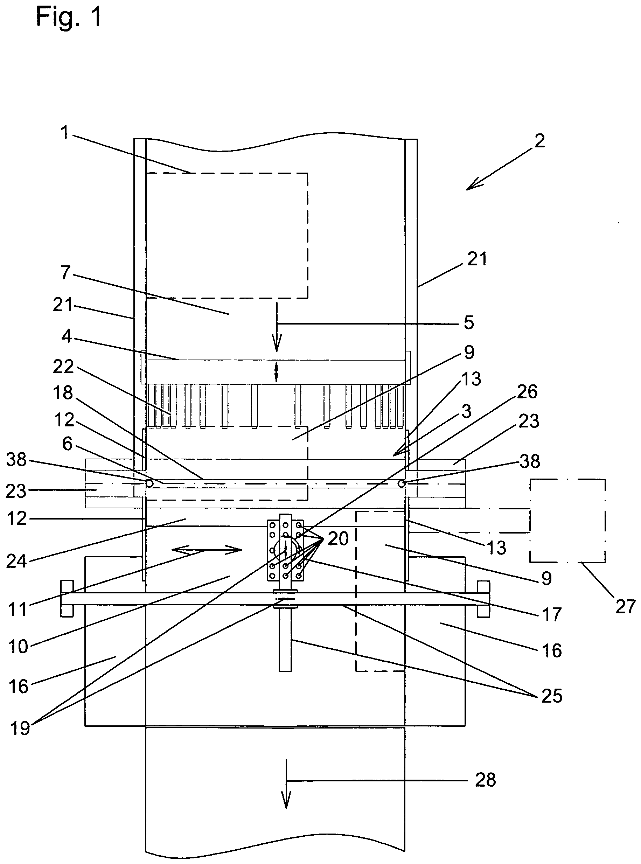

In Fig. 1 ist eine Draufsicht auf eine erfindungsgemäße Plattenaufteilanlage 2 gezeigt, mit der auch das erfindungsgemäße Verfahren durchgeführt werden kann. Die erfindungsgemäße Plattenaufteilanlage 2 weist nur eine Sägelinie 6 auf. In Zuführrichtung 5 gesehen vor der Sägelinie 6, liegt der erste Arbeitsbereich 7 des Auflagetisches 3. In Zuführrichtung 5 gesehen hinter der Sägelinie 6, liegt der zweite Arbeitsbereich 10, welcher ebenfalls Teil des Auflagetisches 3 ist. Die Werkstücke 1 liegen sowohl im ersten Arbeitsbereich 7 als auch im zweiten Arbeitsbereich 10 auf einer entsprechenden Auflageoberfläche des Auflagetisches 3 auf. Um die Reibung zwischen den Werkstücken 1 bzw. den Werkstückteilen 9 und dem Auflagetisch 3 bzw. dessen Auflageoberfläche zu reduzieren, können wie an sich bekannt, in beiden Arbeitsbereichen 7 und 10 Austrittsdüsen zur Ausbildung von Luftkissen, Rollenbahnen, Bürstenoberflächen oder dergleichen auf der Auflageoberfläche ausgebildet sein. Es können in beiden Arbeitsbereichen 7 und 10 auch weitere hier nicht explizit dargestellte zusätzliche Transportmittel wie z.B. angetriebene Rollenbahnen, Riemen- oder Bandförderer oder dergleichen vorgesehen sein. Dies gilt insbesondere auch für den Weitertransport bzw. Abtransport der fertiggestellten Endformate der Werkstückteile in Abführrichtung 28 im zweiten Arbeitsbereich 10, also in Zuführrichtung 5 gesehen hinter der Sägelinie 6. Die weiteren Transportmittel können so ausgelegt sein, dass sie einen Transport von verschiedenen Werkstücken 1 und/oder Werkstückteilen 9 in verschiedenen Bereichen der Arbeitsbereiche 7 und/oder 10 und/oder verschiedenen Richtungen, vorzugsweise gleichzeitig, erlauben. Die weiteren Transportmittel können also segmentiert steuerbar sein.

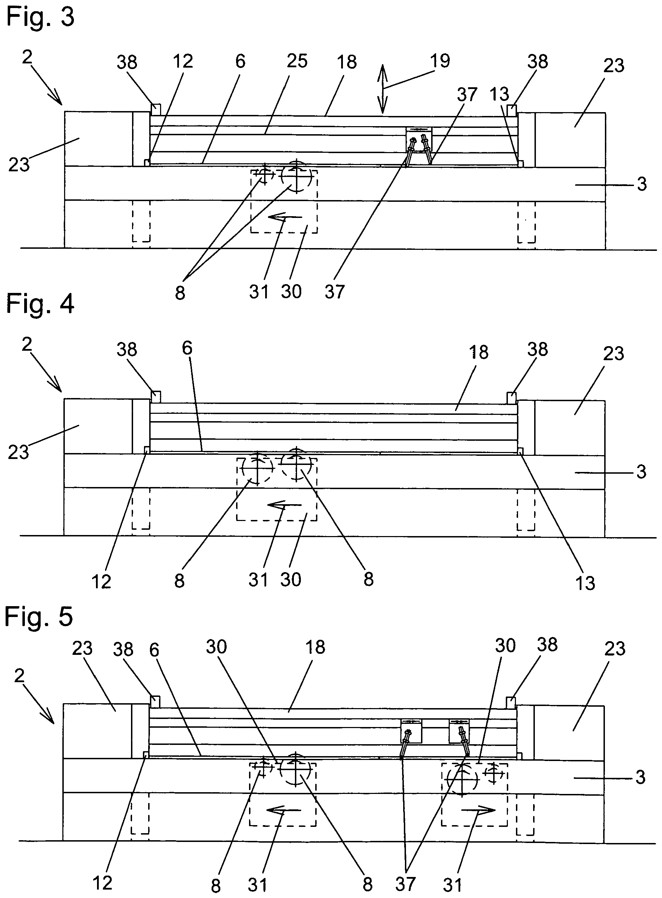

Das hier für die weitere Bearbeitung im ersten Arbeitsbereich 7 bereitgelegte Werkstück 1 in Form einer Platte oder eines Plattenstapels ist hier nur schematisiert eingezeichnet. Sein Antransport zu der Startposition für das nachfolgend geschilderte erfindungsgemäße Verfahren kann, wie beim Stand der Technik an sich bekannt, aus einem Plattenlager oder dergleichen und/oder in oder entgegen der Zuführrichtung 5 oder auch von der Seite her erfolgen. Die durch zumindest einen Sägevorgang aus dem Werkstück entstehenden und entstandenen Werkstückteile werden mit dem Bezugszeichen 9 bezeichnet, egal wie viele Sägevorgänge notwendig sind, bis das jeweilige Werkstückteil erzeugt wird. Wie eingangs bereits erläutert, kann ein Werkstückteil 9 weiter zersägt werden und es entstehen wiederum Werkstückteile 9. Beim Werkstückteil 9 kann es sich also sowohl um ein Zwischenformat wie auch ein Endformat handeln. Für die Sägeeinrichtungen 8, welche die Werkstücke 1 bzw. Werkstückteile 9 entlang der Sägelinie 6 zersägen, gibt es unterschiedliche, beim Stand der Technik bekannte Ausgestaltungsformen. In den Fig. 3 bis 5 werden weiter hinten bevorzugte Varianten in Form von entlang der Sägelinie 6 verfahrbaren Untertischkreissägen erläutert. Es sind aber auch andere beim Stand der Technik bekannte Sägeeinrichtungen 8 möglich.

Über der Sägelinie 6 selbst befindet sich ein an sich bekannter Druckbalken 18, welcher in den Fig. 3 bis 5 in der Frontalansicht besser erkennbar ist. Dieser ist, wie an sich bekannt, an Druckbalkenstehern 23 geführt und wird im Sinne eines vibrationsfreien Sägens beim Sägevorgang abgesenkt, sodass der Druckbalken 18 das Werkstück 1 bzw. Werkstückteil 9, welches gerade zersägt werden soll, im Bereich der Sägelinie 6 auf den Auflagetisch 3 aufdrückt. Im Anschluss an den Sägevorgang wird der Druckbalken 18 dann entlang der Druckbalkensteher 23 wieder abgehoben, um die weitere Verschiebung und Ausrichtung von Werkstück 1 bzw. der Werkstückteile 9 nicht zu behindern. Dies ist an sich bekannt und muss ebenso wenig weiter erläutert werden wie die Tatsache, dass günstigerweise eine Absaugvorrichtung in den Druckbalken 18 integriert ist. Der Druckbalken 18 besitzt, wie in den Fig. 1 bis 5 schematisch durch die Anschlüsse 38 der Absaugung angedeutet, günstigerweise zwei Anschlüsse 38 zum Absaugen der beim Sägen entstehenden Späne, die wechselseitig durch hier nicht dargestellte Schieber im Ansaugkanal so gesteuert werden können, so dass die Absaugrichtung günstigerweise so eingestellt werden kann, dass sie der Richtung entspricht, in der die Sägeeinrichtung 8 die Späne auswürft. Es kann z.B. im sogenannten Gegenlauf geschnitten werden, bei dem sich die Sägeeinrichtung entgegen der Schnittrichtung 31, in der die Sägeeinrichtung 8 während des Sägevorgangs verschoben wird, bewegt bzw. dreht. Beim Sägen im Gegenlauf entspricht die Schnittrichtung 31 günstigerweise der Richtung, in die durch entsprechende Ansteuerung der Absaugung abgesaugt wird. Bevorzugt ist also z.B. vorgesehen dass in Richtung linke Anschlagschiene 12 abgesaugt wird, wenn die Schnittrichtung 31 in Richtung hin zur linken Anschlagschiene 12 zeigt, und umgekehrt. Die Absaugung kann, wie vorher erwähnt, aber alternativ oder zusätzlich auch durch einen entlang der Sägelinie verlaufenden Spalt im Auflagetisch 3, welcher beim Sägen z.B. von der Sägeeinrichtung 8 durchdrungen wird, hindurch erfolgen. Für die Absaugrichtungen in Relation zur Schnittrichtung 31 gilt dann bevorzugt das oben Gesagte. Die Absaugeinrichtungen sind in diesem Sinne günstigerweise segmentiert ansteuerbar.

In der in Fig. 1 gezeigten Variante erfolgt die Zuführung des Werkstücks 1 bzw. des Werkstückteils 9 im ersten Arbeitsbereich 7 hin zur Sägelinie 6 mittels einer in Zuführrichtung 5 und in der Gegenrichtung an den Führungsschienen 21 verschiebbar gelagerten Vorschubeinrichtung 4. Diese weist im gezeigten Ausführungsbeispiel, wie an sich bekannt, mehrere einzeln oder in Gruppen ansteuerbare Greifer 22 auf, mit denen Werkstücke 1 und/oder Werkstückteile 9 zum Transport aber auch zum Festhalten während des Sägevorgangs gegriffen und auch wieder losgelassen werden können. Hingewiesen wird auf jeden Fall noch darauf, dass im gezeigten Ausführungsbeispiel, wie auch in bevorzugten anderen Ausführungsformen der Erfindung vorgesehen ist, dass die eigentlich im ersten Arbeitsbereich 7 hauptsächlich tätige Vorschubeinrichtung 4 auch bei angehobenem Druckbalken 18 unter dem Druckbalken 18 hindurch über die Sägelinie 6 hinweggreifen kann, um dort zersägte Werkstückteile 9 abzulegen und, wie später im Detail noch erläutert, auch Werkstückteile 9 wieder zu greifen und diese entgegen der Zuführrichtung 5 wieder zumindest ein Stück weit in den ersten Arbeitsbereich 7 zurückzuziehen, um sie für den nächsten Sägevorgang zu positionieren. Weiters wird noch darauf hingewiesen, dass die Greifer 22 der Vorschubeinrichtung 4 auch angehoben werden können, um mit der gesamten Vorschubeinrichtung samt Greifern 22 über auf den Auflagetisch 3 aufliegende Werkstücke 1 und/oder Werkstückteile 9 hinwegfahren zu können. Auch dies ist an sich bekannt und muss nicht weiter erläutert werden.

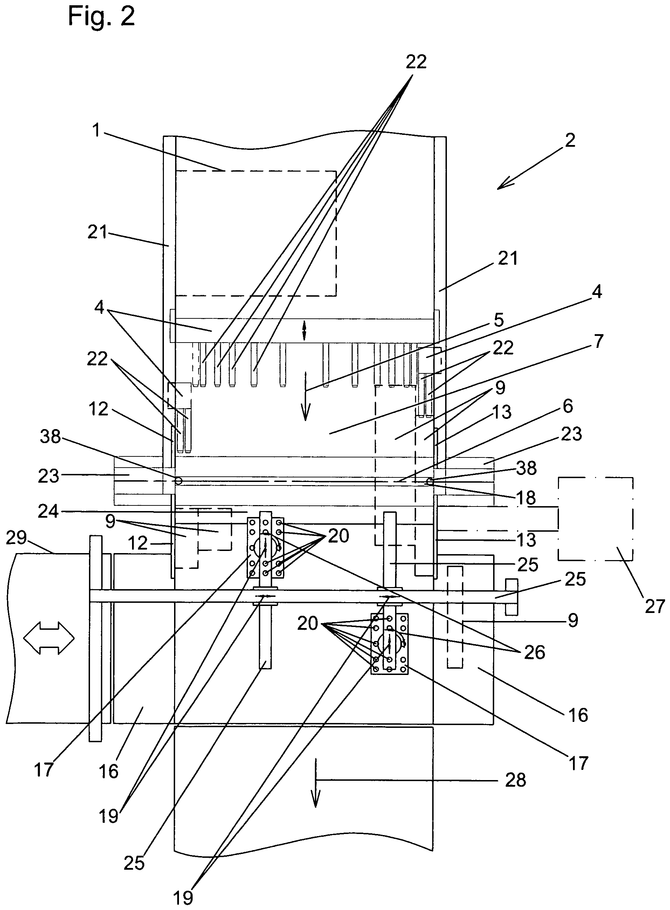

In den Ausführungsvarianten gemäß Fig. 1 und 2 begrenzen die erfindungsgemäß vorgesehenen Anschlagschienen 12 und 13 den ersten Arbeitsbereich 7 vor der Sägelinie 6 und den zweiten Arbeitsbereich 10 hinter der Sägelinie 6 jeweils in Querrichtung 11. Die Anschlagschienen 12 und 13 können, wie eingangs erläutert, aber auch nur den ersten Arbeitsbereich 7 oder nur den zweiten Arbeitsbereich 10 in Querrichtung 11 seitlich begrenzen, oder beispielsweise auch in einer diagonale Art der Anordnung vorgesehen werden. Die Querrichtung 11 steht orthogonal auf der Zuführrichtung 5 und liegt hier parallel zur Zeichenebene bzw. zur Auflageoberfläche des Auflagetisches 3. In anderen Worten begrenzen die Anschlagschienen 12 und 13 den zweiten Arbeitsbereich 10 zumindest bereichsweise links und rechts. Relativ nah hinter der Sägelinie 6 befindet sich über die gesamte Breite des zweiten Arbeitsbereichs 10, in Querrichtung 11 längs erstreckt der Abfallabwurf 24. Dieser ist günstigerweise als verschließbare Öffnung im Auflagetisch 3 ausgebildet. Diese verschließbare Öffnung kann z.B. über entsprechende Klappen, Schiebeverschlüsse oder dergleichen im Auflagetisch 3 realisiert werden. Der Abfallabwurf 24 ist günstigerweise dort angeordnet, wo die Vorschubeinrichtung 4, die Werkstückteile 9 bzw. deren zur Sägelinie 6 weisenden Enden und Abfallstücke 36 positioniert. Dies wird aber weiter hinten noch im Detail erläutert. Vom Abfallabwurf 24 werden die Abfallstücke 36 in diesem Ausführungsbeispiel zur Abfallentsorgung 27 transportiert. Dies kann über ein entsprechendes, an sich bekanntes, in den Abfallabwurf 24 integriertes Förderband oder dergleichen realisiert werden. Hierdurch ist eine besonders einfache Abfallentsorgung möglich. Im zweiten Arbeitsbereich 10 hinter der Sägelinie 6 befindet sich im gezeigten Ausführungsbeispiel auch die Positioniereinrichtung 17. Diese dient dazu, die durch zumindest einen Sägevorgang entstandenen Werkstückteile 9 zu der einen oder anderen Anschlagschiene 12 oder 13 zu befördern. Weiters kann die Positioniereinrichtung 17 die Werkstückteile 9 auch um normal zur Auflageoberfläche des Auflagetisches 3 angeordnete Drehachsen 15 drehen. Weiters ist mit der Positioniereinrichtung 17 günstigerweise auch ein Anheben und Ablegen der Werkstückteile 9 im zweiten Arbeitsbereich 10 möglich. Insbesondere wenn es sich bei den Werkstücken 1 bzw. Werkstückteilen 9 um Einzelplatten handelt, kann die Positioniereinrichtung 17 ein, zwei oder mehrere Ansaugeinrichtungen 20 bzw. Vakuumgreifer aufweisen, mit denen sie die Werkstückteile 9 greifen und manipulieren kann. Bei mehreren Ansaugeinrichtungen 20 sind diese günstigerweise einzeln oder in Gruppen ansteuerbar, um verschieden große Werkstückteile 9 ansaugen zu können. Die Positioniereinrichtung 17 ist günstigerweise in zumindest zwei, vorzugsweise drei, Raumrichtungen 19 bewegbar. Dies sind die in Querrichtung 11 und parallel zur Zuführrichtung 5 ausgerichteten Horizontalrichtungen, sowie günstigerweise auch die in Fig. 3 eingezeichneten Vertikalrichtungen 19. Geeignete Positioniereinrichtungen 17 sind in Form von Handlingsystemen beim Stand der Technik an sich bekannt und müssen hier nicht weiter erläutert werden. Z.B. wenn es sich bei den Werkstücken 1 bzw. Werkstückteilen 9 um Plattenstapel handelt, können die Positioniereinrichtungen 17 auch mit entsprechenden Greifern ausgerüstet sein. Wenn kein Anheben der Werkstückteile 9 vorgesehen ist, kann es sich bei den Positioniereinrichtungen 17 auch um einfache Schieber oder dergleichen handeln. Die Positioniereinrichtung 17 sollte jedenfalls so ausgebildet sein, dass sie über die gesamte Breite des zweiten Arbeitsbereichs 10 zwischen den Anschlagschienen 12 und 13 Werkstückteile 9 entsprechend transportieren, drehen und/oder anderweitig verschieben kann. Darüber hinaus sollte sie in bevorzugten Ausführungsformen auch dazu geeignet sein, Werkstückteile 9 in die Ablagebereiche 16 zu transportieren und dort auch wieder abzuholen. Die Ablagebereiche 16 auf dem Auflagetisch 3 können, wie in den Fig. 1 und 2 gezeigt, außerhalb des zweiten Arbeitsbereichs 10 seitlich neben den Anschlagschienen 12 und 13 angeordnet sein. Es kann sich bei einem Ablagebereich 16 aber auch um einen Teilbereich innerhalb des ersten oder zweiten Arbeitsbereich 7 und 10 handeln. Hierfür bieten sich insbesondere Teilbereiche der Arbeitsbereiche 7 und 10 an, welche bei der Abarbeitung des Sägeplans ansonsten nicht benötigt werden. Im gezeigten Ausführungsbeispiel ist die Positioniereinrichtung 17 mit den daran angeordneten Ansaugeinrichtungen 20 zusätzlich auch noch um die Drehrichtung 26 drehbar. Die Positioniereinrichtung 17 kann wahlweise auch dafür eingesetzt werden, die fertiggestellten Endformate bzw. Werkstückteile 9 in Abführrichtung 28 so weit zu transportieren, bis sie von einem hier im Detail nicht dargestellten weiteren Transportmittel in Abführrichtung 28 weiter transportiert werden. Im gezeigten Ausführungsbeispiel wird die Beweglichkeit der Positioniereinrichtung 17 durch eine Verschiebbarkeit entlang entsprechender Führungen 25 realisiert, welche zum Teil portalartig über dem zweiten Arbeitsbereich 10 angeordnet sind. Dies muss nicht so sein, man könnte auch als entsprechende Positioniereinrichtung 17 bzw. als entsprechendes Handlinggerät einen an sich bekannten Industrieroboter mit zumindest einem entsprechend in zwei oder drei Raumrichtungen bewegbaren Arbeitsarm oder dergleichen vorsehen.

In Fig. 2 ist eine zweite erfindungsgemäße Plattenaufteilanlage 2 gezeigt, deren Grundaufbau im Wesentlichen dem ersten Ausführungsbeispiel entspricht, sodass auf die Gemeinsamkeiten hier nicht noch einmal eingegangen wird. Auch mit dieser Plattenaufteilanlage 2 kann das erfindungsgemäße Verfahren durchgeführt werden. Im Unterschied zum ersten Ausführungsbeispiel weist das zweite Ausführungsbeispiel gemäß Fig. 2 mehrere, hier insgesamt drei, Vorschubeinrichtungen 4 mit jeweils mehreren Greifern 22 auf. Dies ermöglicht es, mehrere Werkstückteile 9 gleichzeitig und unabhängig voneinander in Zuführrichtung 5 oder in die Gegenrichtung zu transportieren. Vor allem können, wenn dies der jeweils abzuarbeitende Sägeplan erlaubt, auch gleichzeitig bzw. gemeinsam zwei oder mehr Werkstückteile 9, vorzugsweise nebeneinanderliegend, hin zu einer der Anschlagschienen 12 bzw. 13 befördert werden und/oder auch gleichzeitig bzw. gemeinsam zwei oder mehr Werkstückteile 9, vorzugsweise nebeneinanderliegend, an der anderen Anschlagschiene 12 bzw. 13 anliegend an der Sägelinie 6 weiter zersägt werden. Dies ist in Fig. 2 so auch beispielhaft eingezeichnet.

Zur weiteren Effektivierung und Beschleunigung des Abarbeitungsprozesses des Sägeplans sind in diesem Ausführungsbeispiel im zweiten Arbeitsbereich 10 hinter der Sägelinie 6 auch zwei Positioniereinrichtungen 17 vorgesehen, welche ansonsten entsprechend der Positioniereinrichtung 17 des ersten Ausführungsbeispiels aufgebaut sein können.

Als dritte Änderung gegenüber dem zweiten Ausführungsbeispiel ist hier auch noch eine Zwischenspeicheranbindung 29 vorgesehen, welche den Austrag und die Zwischenspeicherung von Restteilen beim Aufteilprozess des Werkstücks 1 ermöglicht. Entsprechende Transportmittel in dieser Zwischenspeicheranbindung 29 sind hier nicht explizit dargestellt. Es kann sich aber z.B. um an sich bekannte, angetriebene Rollen, Förderbänder und dergleichen handeln.

Bei den in den Ausführungsbeispielen gemäß der Fig. 1 und 2 gezeigten Varianten handelt es sich um vollautomatisierte Plattenaufteilanlagen 2, welche das erfindungsgemäße Verfahren vollautomatisiert, also ohne manuelle Manipulation des Bedienpersonals durchführen können. Wie eingangs bereits erläutert, sei aber darauf hingewiesen, dass das Verfahren auch teilautomatisiert oder zum Teil manuell abgearbeitet werden kann, indem man z.B. die Positioniereinrichtung 17, wie auch die Vorschubeinrichtung 4 durch entsprechendes Personal ersetzt. Dies bietet sich vor allem bei einfacheren und kleineren Maschinen an.

In den Fig. 3 bis 5 sind nun verschiedene Varianten gezeigt, wie Sägeeinrichtungen 8 z.B. ausgebildet und entlang der Sägelinie 6 verfahrbar sein können. Weiters sind in den Fig. 3 und 5 auch die hier entlang des Druckbalkens 18 und in Vertikalrichtung am Druckbalken 18 verschiebbar gelagerten Ausrichter 37 dargestellt. Diese können, wie eingangs erwähnt, zum exakten Ausrichten des Werkstückteils bzw. der Werkstückteile durch flächiges Andrücken an die Anschlagschiene 12 bzw. 13 in Vorbereitung auf den nächsten Sägevorgang dienen. Hierzu kann z.B. vorgesehen sein, dass das Werkstück 1 und/oder zumindest eines der Werkstückteile 9, vorzugsweise unmittelbar vor seinem bzw. ihrem Zersägen und/oder Absenken des Druckbalkens 18, von zumindest einem Ausrichter 37 zur Ausrichtung in einer Querrichtung 11 an eine der Anschlagschienen 12 oder 13 angedrückt wird bzw. werden. Der oder die Ausrichter 37 ist bzw. sind günstigerweise möglichst nah an der Sägelinie 6 angeordnet. Sie sind günstigerweise in Querrichtungen 11 verfahrbar, und vorzugsweise auch heb- und senkbar. Alternativ zur Anordnung am Druckbalken 18 oder am weiter hinten ebenfalls noch genauer geschilderten Sägewagen 30 können der oder die Ausrichter 37 auch als, insbesondere in Querrichtung 11 verfahrbare, vorzugsweise heb- und absenkbare, Zapfen oder Nocken in den Auflagetisch 3 integriert sein. Die Ausrichter 37 sind bevorzugt einzeln und im Falle von mehreren Ausrichtern 37 unabhängig voneinander ansteuerbar.

In Fig. 3 handelt es sich um eine Variante bei der an einem entlang der Sägelinie 6 verfahrbaren Sägewagen 30 zwei Sägeeinrichtungen 8 in Form von Kreissägeblättern angeordnet sind. Bei dem kleineren, in Schnittrichtung 31 vorgelagerten Sägeblatt 8 handelt es sich um einen sogenannten Vorritzer. Das hintere, größere Sägeblatt 8 dient dem eigentlichen Schnittvorgang. Besonders günstig ist es, wenn der Sägevorgang in Schnittrichtung 31 hin zu der Anschlagschiene 12 oder 13 erfolgt, an der das bzw. die momentan zu zersägende(n) Werkstück oder Werkstückteil- bzw. teile 9 anliegt. Die Sägeblätter 8 können in Vertikalrichtung verstellbar sein, um unter die Auflageoberfläche des Auflagetisches 3 abgesenkt und über diese gehoben werden zu können, wie dies an sich bekannt ist.

Eine Variante hierzu ist in Fig. 4 gezeigt. Hier sind am Sägewagen 30 zwei gleich große Sägeblätter als Sägeeinrichtung 8 vorhanden. Das in Schnittrichtung 31 vorgelagerte Sägeblatt ist jeweils etwas weiter abgesenkt, um als Vorritzer zu dienen. Das hintere Sägeblatt dient dem vollständigen Durchsägen des Werkstücks 1 bzw. der Werkstückteile 9. Fährt man in die zur in Fig. 4 eingezeichneten Schnittrichtung 31 entgegengesetzte Schnittrichtung, so können die Sägeblätter 8 entsprechend anders herum in Vertikalrichtung verfahren werden, sodass wiederum das vordere als Vorritzer weiter abgesenkt und das hintere zum vollständigen Durchsägen des Werkstücks 1 bzw. der Werkstückteile 9 nach oben verschoben ist. Zum Rücktransport können beide Sägeblätter entsprechend weit abgesenkt werden.

In Fig. 5 ist eine Variante gezeigt, bei der entlang der Sägelinie 6 zwei Sägewagen 30 verfahrbar sind, wobei der eine Sägewagen 30 für ein Sägen in die eine Schnittrichtung 31 und der andere Sägewagen ausschließlich für ein Sägen in die andere, entgegengesetzte Schnittrichtung 31 verwendet wird. Die Anordnung von Vorritzer und Hauptsägeblatt 8 sowie deren vertikale Verstellbarkeit gilt für beide Sägewagen 30 entsprechend dem ersten Ausführungsbeispiel.

Günstig ist es jedenfalls, wenn die Schnittrichtung 31 immer in Richtung hin zu der Anschlagschiene 12 oder 13 ausgerichtet ist, an der das gerade zu zersägende Werkstück 1 oder Werkstückteil 9 anliegt. Dies ermöglicht es, wie oben im Detail erläutert, die beim Sägevorgang anfallenden Sägespäne möglichst effektiv über den Druckbalken 18 oder nach unten durch einen entlang der Sägelinie 6 im Auflagetisch 3 verlaufenden Spalt abzusaugen.

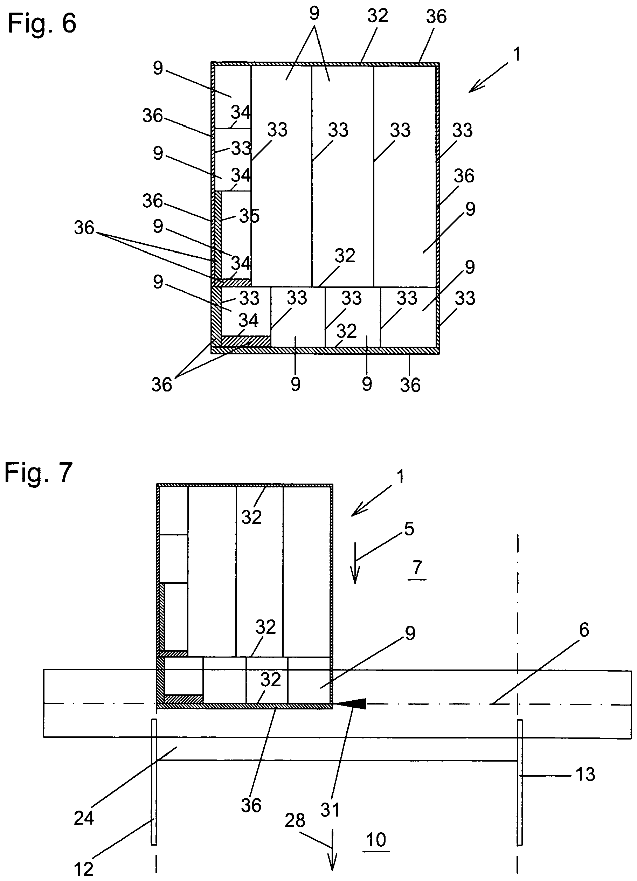

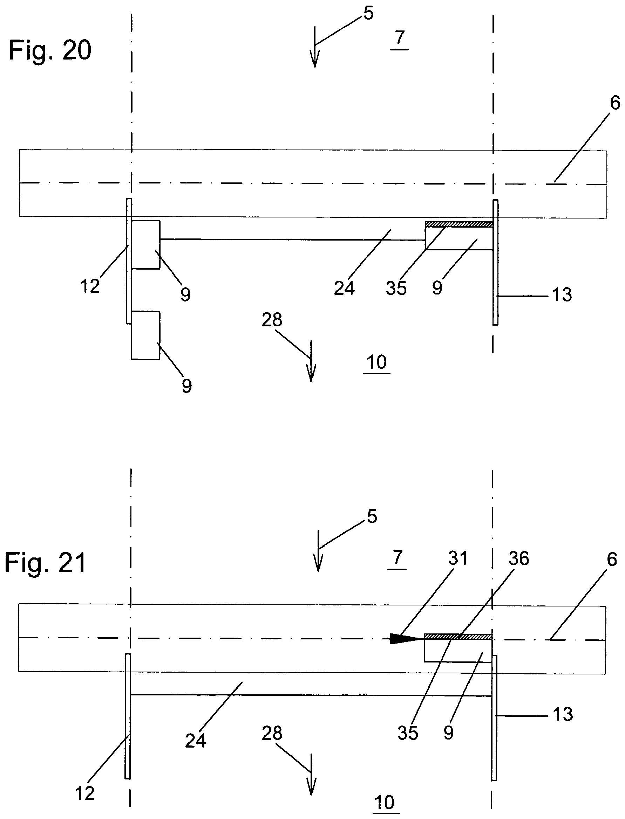

Anhand der Fig. 6 bis 21 wird im Folgenden an einem ersten Ausführungsbeispiel das erfindungsgemäße Verfahren erläutert. Fig. 6 zeigt die Rohplatte bzw. das aufzuteilende Werkstück 1, an welchem der Sägeplan eingezeichnet ist. Der Säge - bzw. Schnittplan umfasst die Erstschnittlinien 32, Zweitschnittlinien 33, Drittschnittlinien 34 und Viertschnittlinien 35. Sind all diese Sägevorgänge entlang dieser Schnittlinien 32 bis 35 durchgeführt, so ergeben sich hieraus die Endformate in Form der in Fig. 6 eingezeichneten Werkstückteile 9, sowie die schraffiert dargestellten Abfallstücke 36. In den Fig. 7 bis 21 sind nun in einer Draufsicht die verschiedenen Verfahrensschritte zur Abarbeitung des in Fig. 6 dargestellten Sägeplans dargestellt. Das erfindungsgemäße Verfahren kann auf einer der beiden hier beispielhaft dargestellten Plattenaufteilanlagen 2 aus den Fig. 1 und 2 aber auch auf anderen Plattenaufteilanlagen, welche entsprechend geeignet oder vorgesehen sind, durchgeführt werden.

Im Sinne einer übersichtlichen Darstellung sind von der jeweiligen Plattenaufteilanlage 3 in den Fig. 7 bis 21 nur der erste und zweite Arbeitsbereich 7 und 10, die beiden im zweiten Arbeitsbereich 10 angeordneten Anschlagschienen 12 und 13 sowie die Sägelinie 6 und der Abfallabwurf 24 dargestellt. Zur Orientierung eingezeichnet sind auch die Zuführrichtung 5 und die Abführrichtung 28, wie sie auch in den Fig. 1 und 2 dargestellt sind. Gezeigt durch einen entsprechenden Pfeil 31 auf der Sägelinie 6 ist auch die jeweilige Schnittrichtung 31. Bei diesem Beispiel wir auf die Anschlagschienen 12 und 13 im ersten Arbeitsbereich 7 verzichtet, sodass diese auch nicht dargestellt sind. Dies ändert aber nicht an der erfindungsgemäßen Vorgehensweise, welche auch mit Anschlagschienen 12 und 13 nur oder zusätzlich im ersten Arbeitsbereich 7 entsprechend durchgeführt werden kann.

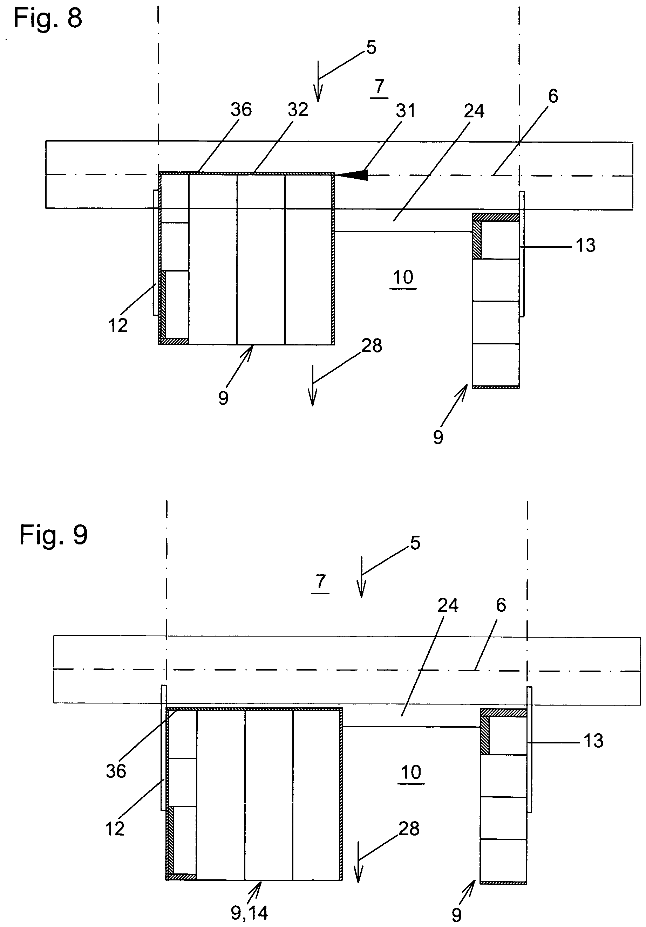

Fig. 7 zeigt die Situation, wenn am Anfang des Verfahrens der erste Erstschnitt 32 durchgeführt wird. Um die Platte bzw. das Werkstück 1 in diese Position zu bringen, wurde die Vorschubeinrichtung 4 entsprechend in Aktion gesetzt. Bei der Durchführung der einzelnen Sägevorgänge wird der Druckbalken 18 entsprechend abgesenkt und anschließend wieder gehoben, worauf im Folgenden nicht mehr jedes Mal eingegangen wird. Im Übergang von Fig. 7 auf Fig. 8 werden durch entsprechendes Vorschieben des Werkstücks 1 in Zuführrichtung 5 nacheinander die Erstschnitte 32 durchgeführt. Zuerst wird das in Fig. 7 eingezeichnete Abfallstück 36 abgesägt. Dies kann dann beim Überfahren des Abfallabwurfs 24 in diesen hineinfallen. Anschließend wird das erste Werkstückteil in Form des in Fig. 7 eingezeichneten Plattenstreifens 9 abgesägt und anschließend, vorzugsweise von der Positioniereinrichtung 17, gedreht und hin zur rechten Anschlagschiene 13 befördert. Diese Position ist in Fig. 8 dargestellt. Fig. 8 zeigt die Situation, bei der der letzte Erstschnitt 32 durchgeführt wird, um das Reststück 36 abzutrennen. Der Vollständigkeit halber wird darauf hingewiesen, dass zur Durchführung der Erstschnitte das Werkstück 1 nicht unbedingt an der Anschlagschiene 12 ausgerichtet sein muss. Während der Ausführung der Erstschnitte 32 und der dazwischen durchgeführten Transportvorgänge in Zuführrichtung 5 bleibt das Werkstück 1 die ganze Zeit in den Greifern 22 der Vorschubeinrichtung 4 gegriffen. Durch das Befördern der beiden, in Fig. 8 dargestellten Werkstückteile 9 hin zu den jeweiligen Anschlagschienen 12 und 13 erfolgt die Vorpositionierung für den nächsten Sägevorgang. Fig. 9 zeigt den Verfahrensabschnitt, wenn das nacheinander im Zuge der Erstschnitte zersägte Werkstückteil 9 mit dem in Fig. 9 noch sichtbaren Abfall 36 über dem Abfallabwurf 24 positioniert wird. Gemäß einer besonders bevorzugten Ausgestaltungsform der Erfindung ist, wie in Fig. 9 dargestellt, das an der rechten Anschlagschiene 13 für den nächsten Sägevorgang vorpositionierte Werkstückteil 9 in einer Position abgelegt, in der die Vorschubeinrichtung 4 das an der linken Anschlagschiene 12 abgelegte, vormals zersägte, Werkstückteil 9 loslassen und das an der rechten Anschlagschiene 13 anliegende Werkstück 9 aufnehmen kann, ohne dass hierfür die Vorschubeinrichtung 4 in Zuführrichtung oder in entgegengesetzter Richtung bewegt werden muss.

Hierdurch ist ein besonders effektives Ablegen des zuletzt zersägten Werkstückteils 9 und gleichzeitiges Aufnehmen des bereits an der anderen Anschlagschiene vorbereiteten bzw. vorpositionierten, im nächsten Sägevorgang zu zersägenden Werkstückteils 9 realisiert. Verallgemeinert gesprochen ist somit, wie eingangs bereits erläutert, günstigerweise vorgesehen, dass hin zu einer der Anschlagschienen 12, 13 beförderte Werkstückteil 9 in eine Position gebracht wird, in der es von der Vorschubeinrichtung 4 bei Verharren der Vorschubeinrichtung 4 in der Zuführrichtung 5 wieder aufgenommen werden kann, während ein Reststück 14 des anderen der Werkstückteile 9 nach dessen Zersägen an der Sägelinie 6 von der Vorschubeinrichtung 4 an der anderen Anschlagschiene 12, 13 abgelegt wird. Unter dem Reststück 14 versteht man dabei das Werkstückteil 9, welches am Ende des jeweiligen Sägevorgangs noch nicht in Abführrichtung 28 weitertransportiert worden ist, sondern für einen weiteren Sägevorgang an der jeweiligen Anschlagschiene 12 oder 13 vorpositioniert wird.

Das exakte Ausrichten der Werkstückteile 9 für den nächsten Sägevorgang durch flächiges Andrücken an eine der Anschlagschienen 12 oder 13 kann, vorzugsweise kurz vor dem Absenken des Druckbalkens 18 bzw. kurz vor dem Sägevorgang, mittels der vorab geschilderten Ausrichter 37 oder bereits mittels der Positioniereinrichtung 17 erfolgen, ohne dass hier im Folgenden jedes Mal einzeln darauf eingegangen wird.

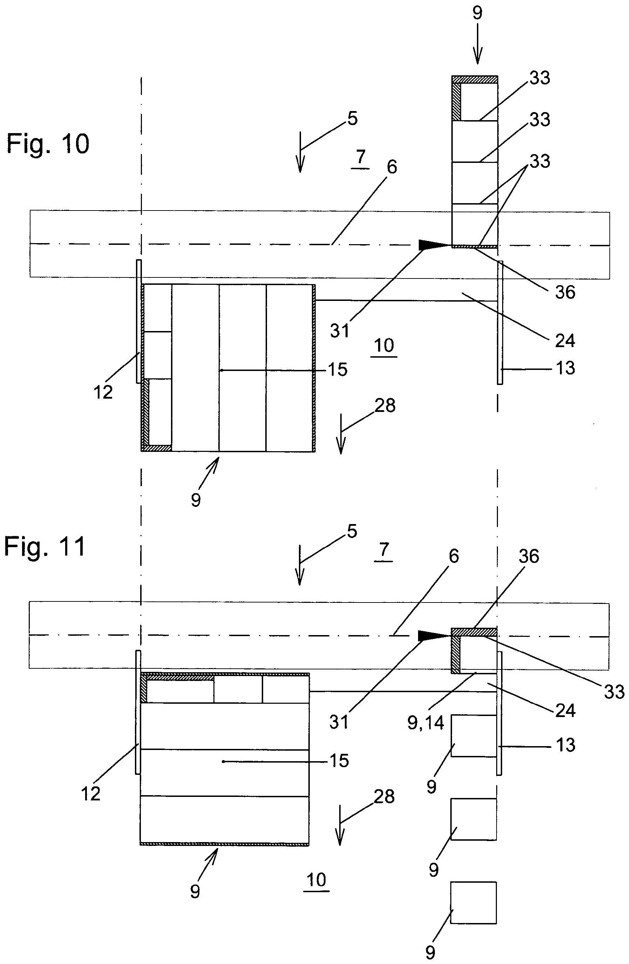

In Fig. 10 ist nun zu sehen, wie bei dem an der linken Anschlagschiene 12 abgelegten, vorpositionierten Werkstückteil 9 der in Fig. 9 noch sichtbare Rest 36 durch den Abfallabwurf 24 entsorgt wurde und das vormals an der rechten Anschlagschiene 13 vorpositionierte Werkstückteil 9 von der Vorschubeinrichtung 4 so weit zurückgezogen wurde, dass nun an diesem Werkstückteil 9 die Zweitschnitte entlang der in Fig. 10 eingezeichneten Zweitschnittlinien 33 nacheinander abgearbeitet werden können. Auch hier ist die Schnittrichtung 31 in Richtung hin zur jeweiligen Anschlagschiene 13 eingezeichnet. Der in Fig. 10 mit dem Bezugszeichen 36 versehene Abfall fällt beim Überfahren des Abfallabwurfs 24 in diesen hinein. Ansonsten werden die in Fig. 11 dargestellten Endformate 9 durch Durchführung der entsprechenden Zweitschnitte entlang der Zweitschnittlinien 33 aus Fig. 10 erzeugt und in Abführrichtung 28 abtransportiert. Dies gilt nicht für das bei diesen Zweitschnitten anfallende Reststück 14, wie es in Fig. 11 eingezeichnet ist.

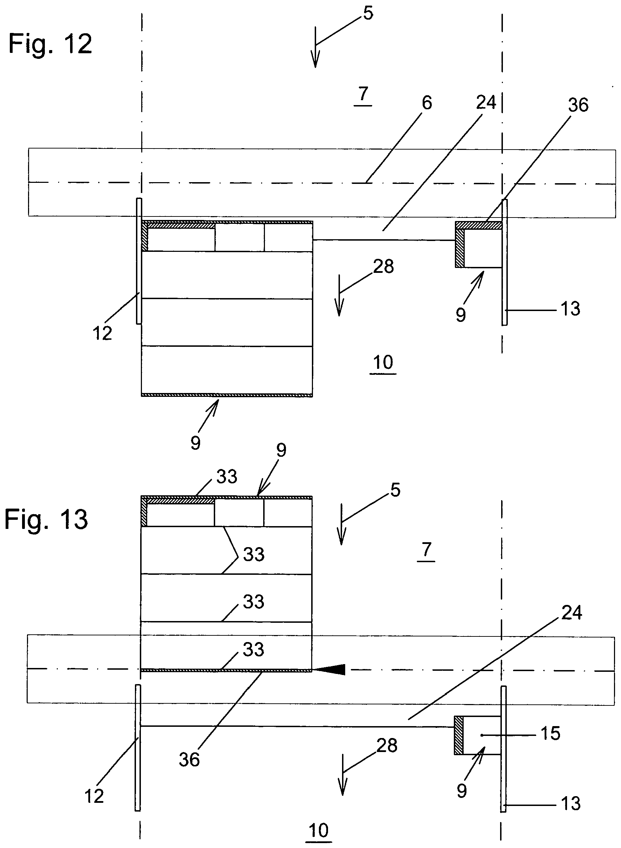

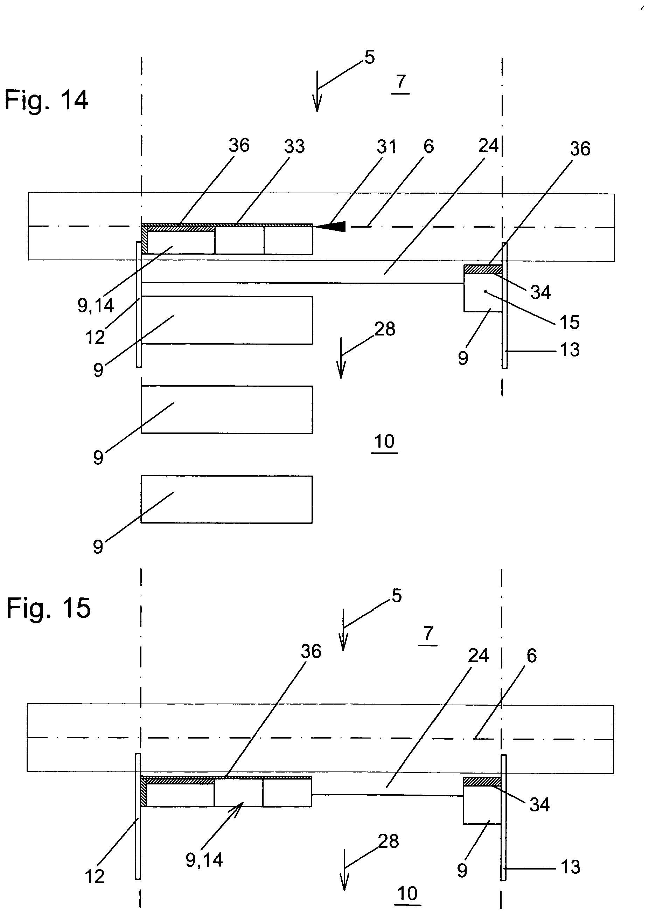

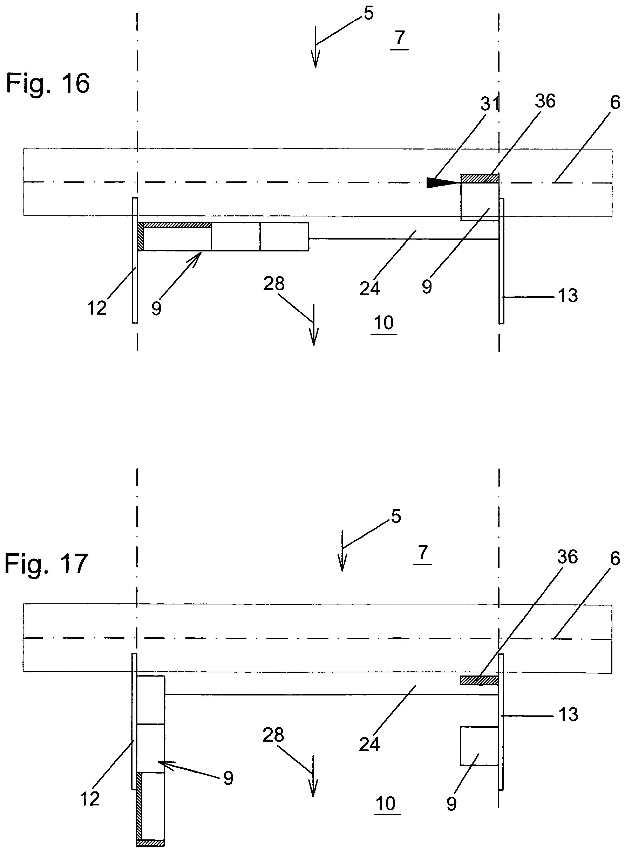

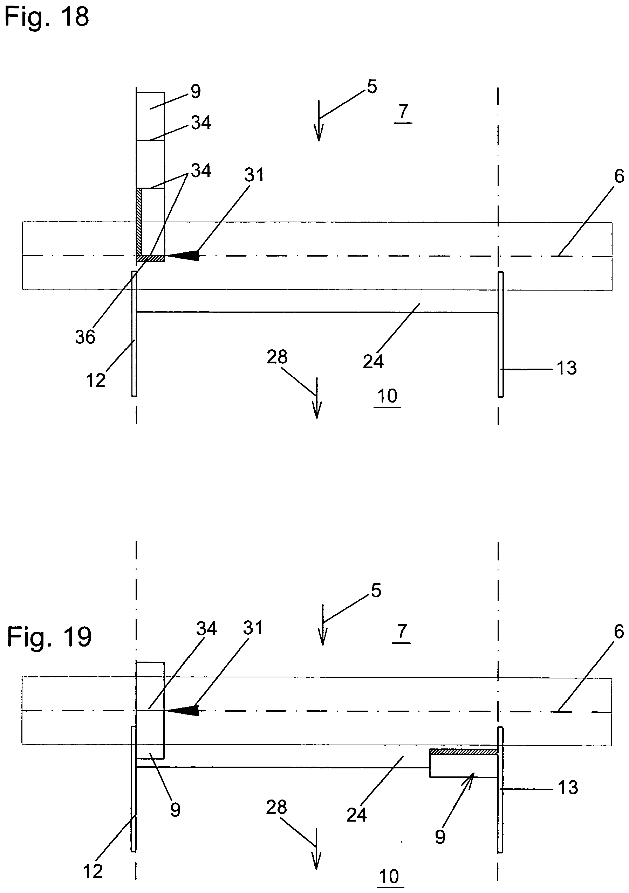

Während an dem an der rechten Anschlagschiene 13 anliegenden Werkstück 9 die entsprechenden Zweitschnitte durchgeführt werden, wird das linke Werkstückteil 9 bzw. Reststück 14 von der Positioniereinrichtung 17 um die vertikal zur Auflageoberfläche des Auflagetisches stehende Drehachse 15 gedreht und so für den nächsten Sägevorgang an der linken Anschlagschiene 12 vorpositioniert. In Fig. 12 ist das Werkstückteil 9 wiederum an der linken Anschlagschiene 12 vorpositioniert, sodass die Vorschubeinrichtung gleichzeitig das an der rechten Anschlagschiene 13 anliegende Werkstückteil 9 bzw. Reststück 14 loslassen und mit den entsprechenden Greifern 22 das an der anderen Anschlagschiene 12 vorpositionierte und ausgerichtete andere Werkstückteil 9 greifen kann und letzteres entgegen der Zuführrichtung 5 über die Sägelinie 6 zurückzuziehen kann, um dann die Zweitschnitte entlang der in Fig. 13 dargestellten Zweitschnittlinien 33 durchzuführen. Durch Öffnen des Abfallabwurfs 24 wird das Reststück 36, wie es in Fig. 12 eingezeichnet ist, entsorgt. Während nun am Übergang von Fig. 13 zu Fig. 14 das an der rechten Anschlagschiene 13 anliegende Werkstückteil 9 durch Drehen um die Drehachse 15 für den nächsten Sägevorgang vorpositioniert wird, werden am an der linken Anschlagschiene 12 anliegenden Werkstückteil 9 die Zweitschnitte durchgeführt und die Endformate 9 in Abführrichtung 28 abtransportiert. In Fig. 15 erfolgt dann wieder das Ablegen des Reststücks 14 an der linken Anschlagschiene 12 und das Aufgreifen des an der rechten Anschlagschiene 13 vorpositionierten Werkstückteils 9, sodass dann am rechten Werkstückteil 9 der Drittschnitt entlang der Drittschnittlinie 34 durchgeführt werden kann, wie dies in Fig. 16 dargestellt ist. Während der Durchführung dieses Drittschnitts wird das andere Werkstückteil 9 wiederum gedreht und an der linken Anschlagschiene 12 vorpositioniert, wie dies aus dem Übergang von Fig. 16 zu 17 dargestellt ist. Die weitere Abarbeitung des Schnittplans in Form der Fig. 18, 19, 20 und 21 erfolgt analog und muss nicht weiter erläutert werden. Es wird lediglich darauf hingewiesen, dass das in Fig. 18 entlang der zweiten Drittschnittlinie 34 vom linken Werkstückteil 9 abgesägte Werkstückteil 9, in Fig. 19 gut sichtbar, von der Positioniereinrichtung 17 auf die andere Seite hin zur rechten Anschlagschiene 13 transportiert wird, um dort gedreht und für den weiteren Sägevorgang vorpositioniert zu werden.

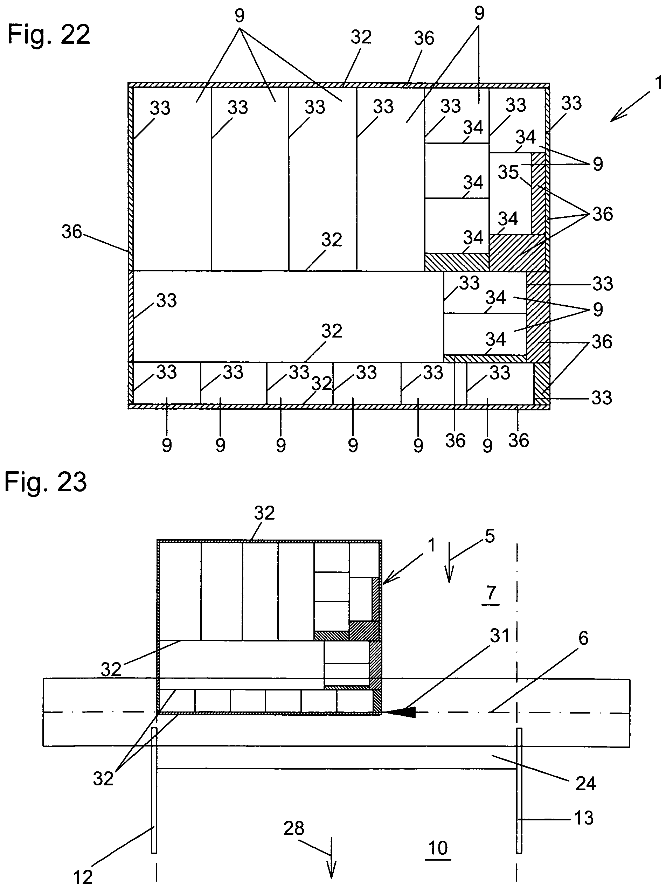

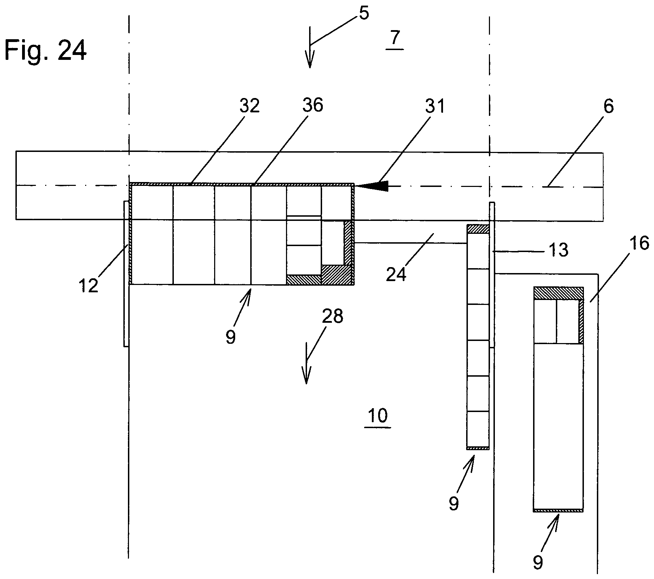

Fig. 22 zeigt durch Einzeichnen der Erst-, Zweit-, Dritt- und Viertschnittlinien 32, 33, 34, 35 sowie der Endformate 9 und der Abfallteile 36 ein Beispiel eines anderen Sägeplans, nach dem ein Werkstück 1 in die Endformate aufgeteilt wird. Grundsätzlich kommt hier dasselbe erfindungsgemäße Verfahren zum Einsatz, indem die entsprechenden Verfahrensschritte nacheinander abgearbeitet werden. Im Unterschied zum ersten Ausführungsbeispiel liegt das Werkstück 1 bei Durchführung der Erstschnitte entlang der Erstschnittlinien 32 mit seiner längsten Kante parallel zur Sägelinie 6. Ein weiterer Unterschied zum ersten Ausführungsbeispiel ist, dass hier im zweiten Ausführungsbeispiel, wie anhand von Fig. 24 zu sehen, eines der Werkstückteile 9 im Ablagebereich 16 außerhalb des zweiten Arbeitsbereichs 10 zwischengelagert wird, während ein Werkstückteil 9 an der linken Anschlagschiene 12 anliegend weiter zersägt und ein anderes Werkstückteil 9 währenddessen an der rechten Anschlagschiene 13 anliegend abgelegt ist. Der Transport des entsprechenden Werkstückteils 9 in den Ablagebereich 16 erfolgt mittels der Positioniereinrichtung 17, genauso wie dessen Zurückholen und Positionieren an einer der Anschlagschienen 12 oder 13, bevor auch dieses Werkstückteil 9 entsprechend zersägt wird.

Die sonstige Vorgehensweise entspricht grundsätzlich dem bezüglich des ersten Ausführungsbeispiels erläuterten Ablauf und muss hier nicht noch einmal näher erläutert werden.

Der Vollständigkeit halber wird mit Bezug auf das Beispiel der Fig. 2 noch darauf hingewiesen, dass die Vorgehensweise grundsätzlich dieselbe ist, wenn nicht nur ein sondern zwei oder mehr, vorzugsweise nebeneinanderliegende, Werkstückteile 9 gleichzeitig bzw. gemeinsam hin zu einer der Anschlagschienen 12 bzw. 13 befördert werden und/oder auch gleichzeitig bzw. gemeinsam zwei oder mehr Werkstückteile 9, vorzugsweise nebeneinanderliegend, an der anderen Anschlagschiene 12 bzw. 13 anliegend an der Sägelinie 6 weiter zersägt werden.

Günstigerweise ist jedenfalls vorgesehen, dass jeder Säge- bzw. Schnittplan komplett abgearbeitet wird, bevor der nächste Sägeplan bzw. das nächste Werkstück 1 folgt. Bei diesen Ausgestaltungsformen werden die Werkstückteile 9 aufeinander folgender Sägepläne bevorzugt nicht miteinander vermischt. Die Schnittpläne können erfindungsgemäß hinsichtlich der Lage der Zuschnitte und Abfälle dahingehend optimiert werden, dass das alternierende Sägen und das Werkstückhandling möglichst ohne Wartezeiten parallel erfolgen kann.

**Legende zu den Hinweisziffern:**

| | | | |
|---|---|---|---|
| 1 | Werkstück | 29 | Zwischenspeicheranbindung |
| 2 | Plattenaufteilanlage | 30 | Sägewagen |
| 3 | Auflagetisch | 31 | Schnittrichtung |
| 4 | Vorschubeinrichtung | 32 | Erstschnittlinie |
| 5 | Zuführrichtung | 33 | Zweitschnittlinie |
| 6 | Sägelinie | 34 | Drittschnittlinie |
| 7 | erster Arbeitsbereich | 35 | Viertschnittlinie |
| 8 | Sägeeinrichtung | 36 | Abfall |
| 9 | Werkstückteil | 37 | Ausrichter |
| 10 | zweiter Arbeitsbereich | 38 | Anschluss |
| 11 | Querrichtung | | |
| 12 | Anschlagschiene | | |
| 13 | Anschlagschiene | | |
| 14 | Reststück | | |
| 15 | Drehachse | | |
| 16 | Ablagebereich | | |
| 17 | Positioniereinrichtung | | |
| 18 | Druckbalken | | |
| 19 | Raumrichtung | | |
| 20 | Ansaugeinrichtung | | |
| 21 | Führungsschienen | | |
| 22 | Greifer | | |
| 23 | Druckbalkensteher | | |
| 24 | Abfallabwurf | | |
| 25 | Führung | | |
| 26 | Drehrichtung | | |
| 27 | Abfallentsorgung | | |
| 28 | Abführrichtung | | |

## Patentansprüche

1. Verfahren zum Zersägen von zumindest einem, aus einer Platte oder einem Plattenstapel bestehenden Werkstück (1) mit einer Plattenaufteilanlage (2), wobei das Werkstück (1) auf einem Auflagetisch (3) der Plattenaufteilanlage (2) liegend zum Zersägen in einer Zuführrichtung (5) aus einem, in Zuführrichtung (5) gesehen vor einer Sägelinie (6) der Plattenaufteilanlage (2) angeordneten, ersten Arbeitsbereich (7) des Auflagetisches (3) der Sägelinie (6) zugeführt und mittels zumindest einer Sägeeinrichtung (8) der Plattenaufteilanlage (2) entlang der Sägelinie (6) in zumindest zwei Werkstückteile (9) zersägt wird und wobei zumindest eines der Werkstückteile (9) über die Sägelinie (6) hinweg in einen, in Zuführrichtung (5) gesehen, hinter der Sägelinie (6) der Plattenaufteilanlage (2) angeordneten zweiten Arbeitsbereich (10) des Auflagetisches (3) transportiert wird, **dadurch gekennzeichnet, dass** der erste Arbeitsbereich (7) und/oder der zweite Arbeitsbereich (10) in einer orthogonal zur Zuführrichtung (5) ausgerichteten Querrichtung (11) von zwei einander gegenüberliegenden Anschlagschienen (12, 13) begrenzt ist bzw. sind und zumindest eines der Werkstückteile (9) hin zu einer der Anschlagschienen (12, 13) befördert wird, während zumindest ein anderes der Werkstückteile (9) an der anderen Anschlagschiene (12, 13) anliegend an der Sägelinie (6) weiter zersägt wird.

2. Verfahren nach Anspruch 1, **dadurch gekennzeichnet, dass** in nacheinander durchgeführten Verfahrensschritten abwechselnd in einem der Verfahrensschritte zumindest eines der Werkstückteile (9) hin zu einer der Anschlagschienen (12, 13) befördert wird, während zumindest ein anderes der Werkstückteile (9) an der anderen Anschlagschiene (12, 13) anliegend an der Sägelinie (6) weiter zersägt wird und in einem später durchgeführten Verfahrensschritt zumindest eines der Werkstückteile (9) an der einen der Anschlagschienen (12, 13) anliegend weiter an der Sägelinie (6) zersägt wird, während zumindest ein anderes der Werkstückteile (9) hin zu der anderen Anschlagschiene (12, 13) befördert wird.

3. Verfahren nach Anspruch 1 oder 2, **dadurch gekennzeichnet, dass** alle Sägevorgänge bis zur vollständigen Aufteilung des Werkstücks (1) an der einen Sägelinie (6) der Plattenaufteilanlage (2) durchgeführt werden.

4. Verfahren nach einem der Ansprüche 1 bis 3, **dadurch gekennzeichnet, dass** die Anschlagschienen (12, 13) jeweils parallel zur Zuführrichtung (5) ausgerichtet sind.

5. Verfahren nach einem der Ansprüche 1 bis 4, **dadurch gekennzeichnet, dass** das Werkstück (1) und/oder zumindest eines der Werkstückteile (9) von zumindest einer Vorschubeinrichtung (4) der Plattenaufteilanlage (2) in oder entgegen der Zuführrichtung (5) im ersten Arbeitsbereich (7) und/oder im zweiten Arbeitsbereich (10) transportiert wird bzw. werden.

6. Verfahren nach Anspruch 5, **dadurch gekennzeichnet, dass** das zumindest eine hin zu einer der Anschlagschienen (12, 13) beförderte Werkstückteil (9) in eine Position gebracht wird, in der es von der Vorschubeinrichtung (4) bei Verharren der Vorschubeinrichtung (4) in der Zuführrichtung (5) wieder aufgenommen werden kann, während zumindest ein Reststück (14) des zumindest einen anderen der Werkstückteile (9) nach dessen Zersägen an der Sägelinie (6) von der Vorschubeinrichtung (4) an der anderen Anschlagschiene (12, 13) abgelegt wird.

7. Verfahren nach einem der Ansprüche 1 bis 6, **dadurch gekennzeichnet, dass** zumindest eines der Werkstückteile (9) vor dem Weiterzersägen dieses Werkstückteils (9), vorzugsweise im zweiten Arbeitsbereich (10), auf dem Auflagetisch (3) um eine zum Auflagetisch (3) normal stehende Drehachse (15) gedreht wird und hin zu einer der Anschlagschienen (12, 13) befördert wird.

8. Verfahren nach einem der Ansprüche 1 bis 7, **dadurch gekennzeichnet, dass** zusätzlich zum Befördern zumindest eines der Werkstückteile (9) hin zu einer der Anschlagschienen (12, 13) und während des Zersägens des zumindest einen anderen der Werkstückteile (9) anliegend an der anderen Anschlagschiene (12) an der Sägelinie (6) zumindest ein zusätzliches Werkstückteil (9) in zumindest einem Ablagebereich (16) auf dem Auflagetisch (3) zwischengelagert wird.

9. Verfahren nach Anspruch 8, **dadurch gekennzeichnet, dass** der Ablagebereich (16) außerhalb des ersten Arbeitsbereichs (7) und außerhalb des zweiten Arbeitsbereichs (10), vorzugsweise in der Querrichtung (11) seitlich neben dem ersten und/oder zweiten Arbeitsbereich (7,10) angeordnet ist.

10. Verfahren nach einem der Ansprüche 1 bis 9, **dadurch gekennzeichnet, dass** die Werkstückteile (9) im zweiten Arbeitsbereich (10) von zumindest einer, insbesondere zusätzlich zur Vorschubeinrichtung (4) vorgesehenen, Positioniereinrichtung (17) der Plattenaufteilanlage (2) hin zu einer der Anschlagschienen (12, 13) befördert und/oder um eine zum Auflagetisch (3) normal ausgerichtet stehende Drehachse (15) gedreht und/oder in einem Ablagebereich (16) auf dem Auflagetisch (3) zwischengelagert werden.

11. Verfahren nach einem der Ansprüche 1 bis 10, **dadurch gekennzeichnet, dass** das zu zersägende Werkstück (1) oder Werkstückteil (9) von einem Druckbalken (18) im Bereich der Sägelinie (6) an den Auflagetisch (3) angedrückt wird.

12. Verfahren nach einem der Ansprüche 1 bis 11, **dadurch gekennzeichnet, dass** das Werkstück (1) und/oder zumindest eines der Werkstückteile (9), vorzugsweise unmittelbar vor seinem bzw. ihrem Zersägen und/oder Absenken des Druckbalkens (18), von zumindest einem Ausrichter (37), vorzugsweise der Plattenaufteilanlage (2), zur Ausrichtung an eine der Anschlagschienen (12, 13) angedrückt wird bzw. werden.

13. Plattenaufteilanlage (2), insbesondere zur Durchführung eines Verfahrens nach einem der Ansprüche 1 bis 12, wobei die Plattenaufteilanlage (2) zumindest folgendes aufweist:
- einen Auflagetisch (3) zum darauf Auflegen zumindest eines, aus einer Platte oder einem Plattenstapel bestehenden Werkstücks (1) und
- eine Zuführrichtung (5) für die Zuführung des Werkstücks (1) zu einer Sägelinie (6) der Plattenaufteilanlage (2) und
- einen, in Zuführrichtung gesehen vor der Sägelinie (6) angeordneten, ersten Arbeitsbereich (7) des Auflagetisches (3) und
- zumindest eine Sägeeinrichtung (8) zum Zersägen des Werkstücks (1) entlang der Sägelinie (6) in zumindest zwei Werkstückteile (9) und
- einen, in Zuführrichtung (5) gesehen hinter der Sägelinie (6) der Plattenaufteilanlage (2) angeordneten, zweiten Arbeitsbereich (10) des Auflagetisches (3) und
- zumindest eine Vorschubeinrichtung (4) zum Transport des Werkstücks (1) und/oder zumindest eines der Werkstückteile (9) in oder entgegen der Zuführrichtung (5) im ersten Arbeitsbereich (7) und/oder im zweiten Arbeitsbereich (10),
**dadurch gekennzeichnet, dass** die Plattenaufteilanlage (2) zwei einander gegenüberliegende Anschlagschienen (12, 13) für die Werkstückteile (9) aufweist, welche den ersten Arbeitsbereich und/oder den zweiten Arbeitsbereich (10) in einer orthogonal zur Zuführrichtung (5) ausgerichteten Querrichtung (11) begrenzen und die Plattenaufteilanlage (2) zusätzlich zur Vorschubeinrichtung (4) zumindest eine Positioniereinrichtung (17) zum Befördern der Werkstückteile (9) im zweiten Arbeitsbereich (10) an die Anschlagschienen (12, 13) und/oder zum Drehen der Werkstückteile (9) im zweiten Arbeitsbereich (10) um eine zum Auflagetisch (3) normal ausgerichtet stehende Drehachse (15) aufweist.

## Claims

1. A method of sawing at least one workpiece (1), consisting of a sheet or a sheet stack, using a sheet sizing system (2), wherein for the purpose of sawing the workpiece (1), lying on a support table (3) of the sheet sizing system (2), is fed in a feed direction (5) from a first work region (7), arranged upstream of a sawing line (6) of the sheet sizing system (2) viewed in the feed direction (5), of the support table (3) to the sawing line (6) and is by means of at least one sawing device (8) of the sheet sizing system (2) sawn along the sawing line (6) into at least two workpiece parts (9) and wherein at least one of the workpiece parts (9) is transported past the sawing line (6) into a second work region (10), arranged downstream of the sawing line (6) of the sheet sizing system (2) viewed in feed direction (5), of the support table (3), **characterized in that** the first work region (7) and/or the second work region (10) is/are bounded in a transverse direction (11) oriented orthogonally to the feed direction (5) by two stop rails (12, 13) located opposite one another and at least one of the workpiece parts (9) is conveyed towards one of the stop rails (12, 13), while at least one other of the workpiece parts (9), contacting the other stop rail (12, 13), is sawn further at the sawing line (6).

2. A method according to claim 1, **characterized in that** in successively executed method steps alternately in one of the method steps at least one of the workpiece parts (9) is conveyed towards one of the stop rails (12, 13), while at least one other of the workpiece parts (9), contacting the other stop rail (12, 13), is sawn further and in a subsequently executed method step at least one of the workpiece parts (9), contacting one of the stop rails (12, 13), is sawn further at the sawing line (6), while at least one other of the workpiece parts (9) is conveyed towards the other stop rail (12, 13).

3. A method according to claim 1 or 2, **characterized in that** all sawing procedures are executed until complete division of the workpiece (1) at the one sawing line (6) of the sheet sizing system (2).

4. A method according to any one of claims 1 to 3, **characterized in that** the stop rails (12, 13) are in each case oriented parallel to the feed direction (5).

5. A method according to any one of claims 1 to 4, **characterized in that** the workpiece (1) and/or at least one of the workpiece parts (9) is/are transported, by at least one advancing device (4) of the sheet sizing system (2), in or counter to the feed direction (5) in the first work region (7) and/or in the second work region (10).

6. A method according to claim 5, **characterized in that** the at least one workpiece part (9) conveyed towards one of the stop rails (12, 13) is brought into a position in which it can be received again by the advancing device (4) in the event of the advancing device (4) remaining in the feed direction (5), while at least one residual piece (14) of the at least one other of the workpiece parts (9) is deposited at the other stop rail (12, 13) by the advancing device (4) after sawing thereof at the sawing line (6).

7. A method according to any one of claims 1 to 6, **characterized in that**, preferably in the second work region (10), at least one of the workpiece parts (9) is, before further sawing of this workpiece part (9), rotated on the support table (3) about a rotational axis (15) perpendicular to the support table (3) and conveyed towards one of the stop rails (12, 13).

8. A method according to any one of claims 1 to 7, **characterized in that** in addition to the conveying of at least one of the workpiece parts (9) towards one of the stop rails (12, 13) and during the sawing of the at least one other of the workpiece parts (9), contacting the other stop rail (12), at the sawing line (6), at least one additional workpiece part (9) is temporarily stored in at least one deposit region (16) on the support table (3).

9. A method according to claim 8, **characterized in that** the deposit region (16) is arranged exterior to the first work region (7) and exterior to the second work region (10), preferably laterally alongside the first and/or second work region (7, 10) in the transverse direction (11).

10. A method according to any one of claims 1 to 9, **characterized in that** the workpiece parts (9) in the second work region (10) are conveyed towards one of the stop rails (12, 13) by at least one positioning device (17), in particular provided in addition to the advancing device (4), of the sheet sizing system (2) and/or are rotated about a rotational axis (15) oriented perpendicularly to the support table (3) and/or are temporarily stored in a deposit region (16) on the support table (3).

11. A method according to any one of claims 1 to 10, **characterized in that** the workpiece (1) or workpiece part (9) to be sawn is pressed against the support table (3) in the region of the sawing line (6) by means of a pressing beam (18).

12. A method according to any one of claims 1 to 11, **characterized in that** the workpiece (1) and/or at least one of the workpiece parts (9) is/are for the purpose of orientation pressed against one of the stop rails (12, 13), preferably directly before its/their sawing and/or lowering of the pressure beam (18), by at least one orientating means (37), preferably of the sheet sizing system (2).

13. A sheet sizing system (2), in particular for the carrying out of a method according to any one of claims 1 to 12, wherein the sheet sizing system (2) has at least the following:
- a support table (3) for the placement thereon of at least one workpiece (1) consisting of a sheet or a sheet stack and
- a feed direction (5) for feeding of the workpiece (1) to a sawing line (6) of the sheet sizing system (2) and
- a first work region (7), arranged upstream of the sawing line (6) viewed in the feed direction, of the support table (3) and
- at least one sawing device (8) for sawing the workpiece (1) into at least two workpiece parts (9) along the sawing line (6) and
- a second work region (10), arranged downstream of the sawing line (6) of the sheet sizing system (2) viewed in the feed direction (5), of the support table (3) and
- at least one advancing device (4) for transporting the workpiece (1) and/or at least one of the workpiece parts (9) in or counter to the feed direction (5) in the first work region (7) and/or in the second working region (10),
**characterized in that** the sheet sizing system (2) has two stop rails (12, 13), located opposite one another, for the workpiece parts (9), which stop rails bound the first work region and/or the second work region (10) in a transverse direction (11) oriented orthogonally to the feed direction (5), and the sheet sizing system (2) has, in addition to the advancing device (4), at least one positioning device (17) to convey the workpiece parts (9) in the second work region (10) to the stop rails (12, 13) and/or to rotate the workpiece parts (9) in the second work region (10) about a rotational axis (15) oriented perpendicularly to the support table (3).

## Revendications

1. Procédé de sciage d'au moins une pièce à usiner (1), constituée d'une plaque ou d'un empilement de plaques, avec une installation de division de plaque (2), dans lequel la pièce à usiner (1), reposant sur une table de support (3) de l'installation de division de plaque (2) pour le sciage dans une direction d'amenée (5), est amenée à une ligne de sciage (6), depuis une première zone de travail (7) de la table de support (3) agencée, vu dans la direction d'amenée (5), devant la ligne de sciage (6) de l'installation de division de plaque (2) et est sciée en au moins deux parties de pièce à usiner (9), le long de la ligne de sciage (6), au moyen d'au moins un dispositif de sciage (8) de l'installation de division de plaque (2) et dans lequel au moins une des parties de pièce à usiner (9) est transportée au-delà de la ligne de sciage (6) dans une deuxième zone de travail (10) de la table de support (3) agencée, vu dans la direction d'amenée (5), derrière la ligne de sciage (6) de l'installation de division de plaque (2), **caractérisé en ce que** la première zone de travail (7) et/ou la deuxième zone de travail (10) est ou sont délimitées, dans une direction transversale (11) orientée orthogonalement à la direction d'amenée (5), par deux rails de butée (12, 13) se faisant face l'un l'autre et au moins une des parties de pièce à usiner (9) est acheminée vers un des rails de butée (12, 13), pendant qu'au moins une autre des parties de pièce (9) continue d'être sciée au niveau de la ligne de sciage (6), en s'appuyant contre l'autre rail de butée (12, 13).

2. Procédé selon la revendication 1, **caractérisé en ce que** dans des étapes de procédé réalisées l'une après l'autre alternativement dans une des étapes de procédé, au moins une des parties de pièce à usiner (9) est acheminée vers un des rails de butée (12, 13), pendant qu'au moins une autre des parties de pièce à usiner (9) continue d'être sciée au niveau de la ligne de sciage (6), en s'appuyant contre l'autre rail de butée (12, 13) et dans une étape de procédé réalisée ultérieurement, au moins une des parties de pièce à usiner (9) continue d'être sciée au niveau de la ligne de sciage (6), en s'appuyant contre l'un des rails de butée (12, 13), pendant qu'au moins une autre des parties de pièce à usiner (9) est acheminée vers l'autre rail de butée (12, 13).

3. Procédé selon la revendication 1 ou 2, **caractérisé en ce que** tous les procédés de sciage sont réalisés jusqu'à la division complète de la pièce à usiner (1) au niveau de la ligne de sciage (6) de l'installation de division de plaque (2).

4. Procédé selon l'une quelconque des revendications 1 à 3, **caractérisé en ce que** les rails de butée (12, 13) sont orientés respectivement parallèlement à la direction d'amenée (5).

5. Procédé selon l'une quelconque des revendications 1 à 4, **caractérisé en ce que** la pièce à usiner (1) et/ou au moins une des parties de pièce à usiner (9) est ou sont transportées par au moins un dispositif d'avance (4) de l'installation de division de plaque (2), dans ou à l'opposé de la direction d'amenée (5) dans la première zone de travail (7) et/ou dans la deuxième zone de travail (10).

6. Procédé selon la revendication 5, **caractérisé en ce que** l'au moins une partie de pièce à usiner (9) acheminée vers un des rails de butée (12, 13) est mise dans une position, dans laquelle elle peut à nouveau être reçue par le dispositif d'avance (4) lorsque le dispositif d'avance (4) reste dans la direction d'amenée (5), pendant qu'au moins une chute (14) de l'au moins une autre des parties de pièce à usiner (9) est déposée, après son sciage au niveau de la ligne de sciage (6), par le dispositif d'avance (4), au niveau de l'autre rail de butée (12, 13).

7. Procédé selon l'une quelconque des revendications 1 à 6, **caractérisé en ce qu'**au moins une des parties de pièce à usiner (9) est tournée avant la poursuite du sciage de cette partie de pièce à usiner (9), de préférence dans une deuxième zone de travail (10), sur la table de support (3), autour d'un axe de rotation (15) perpendiculaire à la table de support (3) et est acheminée vers un des rails de butée (12, 13).

8. Procédé selon l'une quelconque des revendications 1 à 7, **caractérisé en ce qu'**en plus de l'acheminement d'au moins une des parties de pièce à usiner (9) vers un des rails de butée (12, 13) et pendant le sciage de l'au moins une autre des parties de pièce à usiner (9) au niveau de la ligne de sciage (6), en s'appuyant contre l'autre rail de butée (12), au moins une partie de pièce à usiner supplémentaire (9) est entreposée dans au moins une zone de dépôt (16) sur la table de support (3).

9. Procédé selon la revendication 8, **caractérisé en ce que** la zone de dépôt (16) est agencée à l'extérieur de la première zone de travail (7) et à l'extérieur de la deuxième zone de travail (10), de préférence dans la direction transversale (11) latéralement à côté de la première et/ou deuxième zone de travail (7, 10).

10. Procédé selon l'une quelconque des revendications 1 à 9, **caractérisé en ce que** les parties de pièce à usiner (9) dans la deuxième zone de travail (10) sont acheminées vers un des rails de butée (12, 13), par au moins un dispositif de positionnement (17) de l'installation de division de plaque (2), prévu en particulier en plus du dispositif d'avance (4), et/ou sont tournées autour d'un axe de rotation (15) perpendiculaire à la table de support (3) et/ou sont entreposées dans une zone de dépôt (16) sur la table de support (3).

11. Procédé selon l'une quelconque des revendications 1 à 10, **caractérisé en ce que** la pièce à usiner (1) ou partie de pièce à usiner (9) à scier est pressée par une barre de pression (18) dans la zone de la ligne de sciage (6) contre la table de support (3).

12. Procédé selon l'une quelconque des revendications 1 à 11, **caractérisé en ce que** la pièce à usiner (1) et/ou au moins une des parties de pièce à usiner (9) est ou sont pressées, de préférence directement avant son ou leur sciage et/ou abaissement de la barre de pression (18), par au moins un aligneur (37), de préférence de l'installation de division de plaque (2), pour l'alignement contre un des rails de butée (12, 13).

13. Installation de division de plaque (2), en particulier pour la réalisation d'un procédé selon l'une quelconque des revendications 1 à 12, dans laquelle l'installation de division de plaque (2) présente au moins ce qui suit :
- une table de support (3) pour poser dessus au moins une pièce à usiner (1) constituée d'une plaque ou d'un empilement de plaques et
- une direction d'amenée (5) pour l'amenée de la pièce à usiner (1) vers une ligne de sciage (6) de l'installation de division de plaque (2) et
- une première zone de travail (7) de la table de support (3), agencée, vu dans la direction d'amenée (5), devant la ligne de sciage (6), et
- au moins un dispositif de sciage (8) pour le sciage de la pièce à usiner (1), le long de la ligne de sciage (6), en au moins deux parties de pièce à usiner (9), et
- une deuxième zone de travail (10) de la table de support (3), agencée, vu dans la direction d'amenée (5), derrière la ligne de sciage (6) de l'installation de division de plaque (2), et
- au moins un dispositif d'avance (4) pour le transport de la pièce à usiner (1) et/ou d'au moins une des parties de pièce à usiner (9), dans ou à l'opposé de la direction d'amenée (5) dans la première zone de travail (7) et/ou dans la deuxième zone de travail (10),
**caractérisée en ce que** l'installation de division de plaque (2) présente deux rails de butée (12, 13) se faisant face l'un l'autre pour les parties de pièce à usiner (9), lesquels délimitent la première zone de travail et/ou la deuxième zone de travail (10) dans une direction transversale (11) orientée orthogonalement à la direction d'amenée (5) et l'installation de division de plaque (2) présente en plus du dispositif d'avance (4), au moins un dispositif de positionnement (17) pour l'acheminement des parties de pièce à usiner (9) dans la deuxième zone de travail (10), vers les rails de butée (12, 13) et/ou pour la rotation des parties de pièce à usiner (9) dans la deuxième zone de travail (10), autour d'un axe de rotation (15) perpendiculaire à la table de support (3).
